# EUROPEAN PATENT APPLICATION

(11) **EP 4 648 299 A1**
(43) Date of publication of application: **12.11.2025**
(21) Application number: 23923798.5
(22) Date of filing: 27.11.2023
(51) Int. Cl.: H04B 7/0404

(54) **COMMUNICATION METHOD AND ELECTRONIC DEVICE**

(30) Priority: 23.02.2023 CN 202310158291
(71) Applicant: Honor Device Co., Ltd., Shenzhen, Guangdong 518040 (CN)
(72) Inventor: SHEN, Li, Shenzhen, Guangdong 518040 (CN); MA, Hongyang, Shenzhen, Guangdong 518040 (CN); DONG, Jiyang, Shenzhen, Guangdong 518040 (CN); WANG, Yi, Shenzhen, Guangdong 518040 (CN)
(74) Representative: Isarpatent
(86) International application number: PCT/CN2023/134455
(87) International publication number: WO 2024/174635

(57) **Abstract**

Embodiments of this application are applied to the communication field, and provide a communication method and an electronic device. In a scenario in which operating frequency bands of Wi-Fi communication and Bluetooth communication overlap, an electronic device may obtain a first communication indicator threshold after determining that the electronic device meets a first preset condition, and then compare a latest communication indicator obtained in real time with the first communication indicator threshold, to determine whether the latest communication indicator meets a second preset condition. When the latest communication indicator meets the second preset condition, the electronic device may perform Wi-Fi communication through a first antenna and perform Bluetooth communication through a second antenna. In this way, interference between the Wi-Fi communication and the Bluetooth communication can be reduced, and good transmission performance can be maintained. This not only improves system flexibility, but also improves communication quality of the electronic device.

## Description

This application claims priority to Chinese Patent Application No. 202310158291.6, filed with the China National Intellectual Property Administration on February 23, 2023 and entitled "COMMUNICATION METHOD AND ELECTRONIC DEVICE", which is incorporated herein by reference in its entirety.

### TECHNICAL FIELD

This application relates to the communication field, and in particular, to a communication method and an electronic device.

### BACKGROUND

With continuous development of communication technologies, an electronic device generally supports both a Bluetooth communication mode and a wireless fidelity (wireless fidelity, Wi-Fi) communication mode.

In a process in which the electronic device performs communication in both the Bluetooth communication mode and the Wi-Fi communication mode, the electronic device may perform Bluetooth communication and Wi-Fi communication in a time division mode. The time division mode indicates that the electronic device performs Bluetooth communication and Wi-Fi communication through time division by multiplexing an antenna. Consequently, the electronic device cannot perform communication in the Wi-Fi communication mode or the Bluetooth communication mode within some time. This affects communication quality. For example, in a process in which the electronic device performs a video call in the Wi-Fi communication mode, the electronic device is also connected to a Bluetooth headset. The electronic device sends/receives audio/video data in the Wi-Fi communication mode, sends audio data to the Bluetooth headset in the Bluetooth communication mode, and receives audio data captured by the Bluetooth headset. However, because the electronic device performs Bluetooth communication and Wi-Fi communication in the time division mode, the electronic device cannot send/receive audio/video data in real time within some time. This causes frame freezing of sound or a picture, and affects user experience.

### SUMMARY

Embodiments of this application provide a communication method and an electronic device, to reduce interference between Wi-Fi communication and Bluetooth communication and maintain good transmission performance. This not only improves system flexibility, but also improves communication quality of an electronic device.

According to a first aspect, a communication method is provided, and is applied to an electronic device. The electronic device is equipped with a first antenna and a second antenna, and the first antenna is different from the second antenna. The method includes:
The electronic device needs to obtain a first communication indicator threshold if the electronic device meets a first preset condition when the electronic device performs wireless fidelity Wi-Fi communication, where the electronic device performs Bluetooth communication and Wi-Fi communication by using the first antenna when meeting a second preset condition;
the electronic device compares the first communication indicator threshold with a latest communication indicator, to determine whether the latest communication indicator meets a second preset condition, where the first communication indicator threshold includes a first Wi-Fi received signal strength threshold, and the latest communication indicator includes a Wi-Fi received signal strength; and
the electronic device performs Wi-Fi communication by using the first antenna and performs Bluetooth communication by using the second antenna when determining that the latest communication indicator meets the second preset condition, where the second preset condition includes that the Wi-Fi received signal strength is greater than the first Wi-Fi received signal strength threshold.

In this application, when operating frequency bands of a Wi-Fi module and a Bluetooth module in the electronic device overlap (for example, the operating frequency bands of the Wi-Fi module and the Bluetooth module are both 2.4 GHz), the electronic device may determine the first communication indicator threshold after determining that the electronic device meets the first preset condition, and then compare a current communication indicator obtained in real time with the first communication indicator threshold, to determine whether the electronic device meets the second preset condition, to be specific, whether communication quality is poor when the electronic device simultaneously performs Bluetooth communication and Wi-Fi communication. If the electronic device meets the second preset condition, whether Wi-Fi communication and Bluetooth communication need to be performed by using different antennas is determined.

In this way, interference between the Wi-Fi communication and the Bluetooth communication can be reduced, and good transmission performance can be maintained. This not only improves system flexibility, but also improves communication quality of the electronic device.

For example, the first preset condition may include that the electronic device starts to perform Bluetooth communication, or a communication quality value of a target communication mode of the electronic device is less than a preset quality value in a process in which the electronic device performs Bluetooth communication and Wi-Fi communication in a time division mode. The target communication mode includes a Wi-Fi communication mode/Bluetooth communication mode.

For example, the communication quality value may include a rate, a received signal strength, a transmit power, a symbol error rate, or a signal-to-noise ratio.

In this application, the first preset condition is used for determining whether the electronic device needs to perform Bluetooth communication and Wi-Fi communication by using different antennas, and the first preset condition includes different scenarios: The electronic device starts to perform Bluetooth communication, or the communication quality value of the target communication mode of the electronic device is less than the preset quality value in the process in which the electronic device performs Bluetooth communication and Wi-Fi communication in the time division mode. Therefore, operating modes of the Bluetooth communication and the Wi-Fi communication can be adjusted in a timely manner by determining whether the electronic device meets the first preset condition, to improve communication quality of the electronic device.

In an example, the first communication indicator threshold is related to a Wi-Fi benefit. The Wi-Fi benefit is a degree of improvement of a Wi-Fi rate when the electronic device switches from performing Bluetooth communication and Wi-Fi communication in the time division mode to performing Bluetooth communication and Wi-Fi communication in a parallel mode.

In another example, the first communication indicator threshold is related to transmission performance and/or an operating bandwidth of a router.

In this application, the first communication indicator threshold is determined based on the Wi-Fi benefit or the transmission performance and/or the operating bandwidth of the router. In this way, accuracy of determining the first communication indicator threshold can be improved, and further, whether the electronic device can perform Bluetooth communication and Wi-Fi communication by using different antennas can be accurately determined.

For example, the latest communication indicator may further include at least one of a Bluetooth transmit power, a Bluetooth received signal strength, a Bluetooth signal-to-noise ratio, a Bluetooth symbol error rate, a Wi-Fi transmit power, a Wi-Fi signal-to-noise ratio, and a Wi-Fi symbol error rate.

Correspondingly, the first communication indicator threshold may further include at least one of a first Bluetooth transmit power threshold, a first Bluetooth received signal strength threshold, a first Bluetooth signal-to-noise ratio threshold, a first Bluetooth symbol error rate threshold, a first Wi-Fi transmit power threshold, a first Wi-Fi signal-to-noise ratio threshold, and a first Wi-Fi symbol error rate threshold. The first communication indicator threshold is in a one-to-one correspondence with the latest communication indicator.

For example, the second preset condition may further include at least one of the following: The Bluetooth transmit power is greater than the first Bluetooth transmit power threshold, the Bluetooth received signal strength is greater than the first Bluetooth received signal strength threshold, the Bluetooth signal-to-noise ratio is less than the first Bluetooth signal-to-noise ratio threshold, the Bluetooth symbol error rate is less than the first Bluetooth symbol error rate threshold, the Wi-Fi transmit power is greater than the first Wi-Fi transmit power threshold, the Wi-Fi signal-to-noise ratio is less than the first Wi-Fi signal-to-noise ratio threshold, and the Wi-Fi symbol error rate is less than the first Wi-Fi symbol error rate threshold.

In this application, whether the electronic device can enter an independent transmission state is separately determined from a plurality of perspectives such as the Bluetooth transmit power, the Bluetooth received signal strength, the Bluetooth signal-to-noise ratio, the Bluetooth symbol error rate, the Wi-Fi transmit power, the Wi-Fi signal-to-noise ratio, and the Wi-Fi symbol error rate. This can improve accuracy of entering the independent transmission state by the electronic device, and reduce occurrence of a case that the electronic device incorrectly enters the independent transmission state due to incorrect determining of a communication indicator, to improve communication quality of the electronic device.

In a possible implementation, the electronic device may obtain the first communication indicator threshold based on a Bluetooth coding format or directly.

In an example, the electronic device may obtain the first communication indicator threshold based on the Bluetooth coding format. For example, the electronic device may obtain a first Bluetooth coding format. The electronic device determines a first communication indicator threshold corresponding to the first Bluetooth coding format from a first configuration table. The first configuration table includes the first Bluetooth coding format and the first communication indicator threshold corresponding to the first Bluetooth coding format.

In this application, the electronic device may directly obtain the first communication indicator threshold from the prestored first configuration table after obtaining the first Bluetooth coding format. This not only can improve accuracy of determining the first communication indicator threshold, but also can reduce configuration time, to improve operating efficiency of the electronic device.

In another example, the electronic device may alternatively directly obtain a first communication indicator threshold. To be specific, the electronic device does not need to search for a corresponding first communication indicator threshold by using the first Bluetooth coding format or other information, but may directly obtain the first communication indicator threshold from a preset location. In other words, first communication indicator thresholds corresponding to different Bluetooth coding formats may be the same.

In this application, efficiency of determining the first communication indicator threshold can be improved by directly obtaining the first communication indicator threshold. In this way, efficiency of determining, by the electronic device by using the first communication indicator threshold, whether the electronic device meets the second preset condition can be improved, in other words, efficiency of determining whether the electronic device needs to enter the parallel mode is improved.

In a possible implementation, the foregoing process of obtaining, by the electronic device, the first communication indicator threshold if the electronic device meets the first preset condition may include:
The electronic device determines a first communication parameter of the electronic device when the electronic device meets the first preset condition, where the first communication parameter includes at least one of the first Bluetooth coding format, identification information of a first router, and a first isolation;
the electronic device determines whether the first configuration table includes an operating mode identifier corresponding to the first communication parameter;
when determining that the first configuration table includes the operating mode identifier corresponding to the first communication parameter, the electronic device determines an operating mode corresponding to the operating mode identifier corresponding to the first communication parameter as a first operating mode; and
when determining that the first operating mode is the parallel mode, the electronic device determines the first communication indicator threshold corresponding to the first Bluetooth coding format.

In this application, the electronic device first determines, based on the first communication parameter, whether the first configuration table includes the operating mode identifier corresponding to the first communication parameter; after determining that the first configuration table includes the operating mode identifier corresponding to the first communication parameter, determines the operating mode identifier corresponding to the first communication parameter as the first operating mode; and determines the first communication indicator threshold corresponding to the first Bluetooth coding format after determining that the first operating mode is the parallel mode. This can reduce occurrence of a case that antenna resources are wasted due to determining on an electronic device that performs communication in the time division mode, so that an unnecessary waste of resources is reduced.

In a possible implementation, when determining that the first configuration table does not include the operating mode identifier corresponding to the first communication parameter, the electronic device separately determines Wi-Fi rates of the electronic device in different operating modes, and determines an operating mode corresponding to the highest one of the Wi-Fi rates as a first operating mode.

In this application, after determining that the first configuration table does not include the operating mode identifier corresponding to the first communication parameter, the electronic device needs to determine the first operating mode based on the Wi-Fi rates of the electronic device in different operating modes. This can ensure that, when encountering a Bluetooth coding format or a router that has not occurred, the electronic device can autonomously perform learning to determine the first operating mode, to provide a basis for subsequently determining whether the electronic device is to enter the independent transmission state.

For example, the foregoing process of separately determining the Wi-Fi rates of the electronic device in different operating modes and determining the operating mode corresponding to the highest one of the Wi-Fi rates as the first operating mode may include:
The electronic device determines a first Wi-Fi rate of the electronic device in the time division mode;
the electronic device determines a second Wi-Fi rate of the electronic device in the parallel mode when determining that the first Wi-Fi rate is less than a preset rate; and
when determining that the second Wi-Fi rate is greater than the first Wi-Fi rate, the electronic device determines that the first operating mode is the parallel mode.

In this application, the electronic device preferentially determines the first Wi-Fi rate of the electronic device in the time division mode. The first Wi-Fi rate being less than the preset rate indicates that a transmission rate of the electronic device in the time division mode is low. Therefore, the second Wi-Fi rate of the electronic device in the parallel mode needs to be determined. The second Wi-Fi rate being greater than the first Wi-Fi rate indicates that a Wi-Fi rate of the electronic device in the time division mode is higher than a Wi-Fi rate of the electronic device in the parallel mode. That is, the electronic device has a Wi-Fi benefit. Therefore, it can be determined that the first operating mode is the parallel mode. In this way, accuracy of determining the first operating mode is improved.

In a possible implementation, when determining that the first Wi-Fi rate is greater than or equal to the preset rate, the electronic device determines that the first operating mode is the time division mode.

In this application, the first Wi-Fi rate being greater than or equal to the preset rate indicates that a transmission rate of the electronic device in the time division mode is high, and the electronic device does not need to switch to the parallel mode to perform Bluetooth communication or Wi-Fi communication. Therefore, it can be determined that the first operating mode is the time division mode. This can improve accuracy of determining the first operating mode while saving antenna resources.

In a possible implementation, the separately determining the Wi-Fi rates of the electronic device in different operating modes and determining the operating mode corresponding to the highest one of the Wi-Fi rates as the first operating mode may include:
The electronic device determines a first Wi-Fi rate of the electronic device in the time division mode;
the electronic device determines a second Wi-Fi rate of the electronic device in the parallel mode when determining that the first Wi-Fi rate is less than a preset rate; and
when determining that the second Wi-Fi rate is greater than the preset rate, the electronic device determines that the first operating mode is the parallel mode.

In this application, the electronic device preferentially determines the first Wi-Fi rate of the electronic device in the time division mode. The first Wi-Fi rate being less than the preset rate indicates that a transmission rate of the electronic device in the time division mode is low. Therefore, the second Wi-Fi rate of the electronic device in the parallel mode needs to be determined. The second Wi-Fi rate being greater than the preset rate indicates that a transmission rate of the electronic device in the parallel mode is high and meets a preset condition. Therefore, it can be determined that the first operating mode is the parallel mode. In this way, only an operating mode corresponding to a Wi-Fi rate greater than the preset rate can be used as the first operating mode, so that occurrence of a waste of resources caused by a low degree of improvement of a Wi-Fi rate is reduced, and an unnecessary waste of resources is reduced.

In a possible implementation, when determining that the second Wi-Fi rate is less than or equal to the preset rate, the electronic device determines an operating mode corresponding to the highest one of the first Wi-Fi rate and the second Wi-Fi rate as the first operating mode.

In this application, the second Wi-Fi rate being less than or equal to the preset rate indicates that neither the first Wi-Fi rate nor the second Wi-Fi rate can meet the preset condition. Therefore, a highest Wi-Fi rate needs to be determined from the first Wi-Fi rate and the second Wi-Fi rate, and an operating mode corresponding to the Wi-Fi rate is determined as the first operating mode. In this way, accuracy of determining the first operating mode can be improved.

For example, the parallel mode includes a first parallel mode and a second parallel mode. In the first parallel mode, the electronic device performs Wi-Fi communication and Bluetooth communication in parallel by using different antennas, and an operating bandwidth of the Wi-Fi communication is a first operating bandwidth. In the second parallel mode, the electronic device performs Wi-Fi communication and Bluetooth communication in parallel by using different antennas, and an operating bandwidth of the Wi-Fi communication is a second operating bandwidth. The first operating bandwidth is different from the second operating bandwidth.

That the electronic device determines a second Wi-Fi rate of the electronic device in the parallel mode when determining that the first Wi-Fi rate is less than a preset rate includes:
The electronic device determines a third Wi-Fi rate of the electronic device in the first parallel mode and a fourth Wi-Fi rate of the electronic device in the second parallel mode when determining that the first Wi-Fi rate is less than the preset rate; and
the electronic device determines the highest one of the third Wi-Fi rate and the fourth Wi-Fi rate as a second Wi-Fi rate.

In this application, if the first Wi-Fi rate is less than the preset rate, a highest Wi-Fi rate needs to be selected from the first parallel mode and the second parallel mode as the second Wi-Fi rate. In this way, accuracy of determining the first operating mode can be improved.

In a possible implementation, the first operating bandwidth is 20 MHz, and the second operating bandwidth is 40 MHz.

In a possible implementation, the communication method further includes:
After the electronic device performs Wi-Fi communication by using the first antenna and performs Bluetooth communication by using the second antenna, that is, after the electronic device enters the independent transmission state, the electronic device determines a second communication indicator threshold, where the second communication indicator threshold includes a second Wi-Fi received signal strength threshold;
the latest communication indicator is compared with the second communication indicator threshold to determine whether the electronic device meets a third preset condition; and
the electronic device performs Bluetooth communication and Wi-Fi communication by using the first antenna when the latest communication indicator meets the third preset condition, where the third preset condition includes that the Wi-Fi received signal strength is less than the second Wi-Fi received signal strength threshold.

In this application, after performing Wi-Fi communication and Bluetooth communication by using different antennas, the electronic device still needs to determine the second communication indicator threshold, and compare a current communication indicator obtained in real time with the first communication indicator threshold, to determine whether the electronic device is to perform Bluetooth communication and Wi-Fi communication by using the first antenna. This can save antenna resources while ensuring a Wi-Fi rate.

For example, the second communication indicator threshold further includes at least one of a second Bluetooth transmit power threshold, a second Bluetooth received signal strength threshold, a second Bluetooth signal-to-noise ratio threshold, a second Bluetooth symbol error rate threshold, a second Wi-Fi transmit power threshold, a second Wi-Fi signal-to-noise ratio threshold, and a second Wi-Fi symbol error rate threshold.

Correspondingly, the third preset condition further includes at least one of the following: The Bluetooth transmit power is less than the second Bluetooth transmit power threshold, the Bluetooth received signal strength is less than the second Bluetooth received signal strength threshold, the Bluetooth symbol error rate is greater than the second Bluetooth symbol error rate threshold, the Wi-Fi transmit power is less than the second Wi-Fi transmit power threshold, the Wi-Fi signal-to-noise ratio is greater than the second Wi-Fi signal-to-noise ratio threshold, the Wi-Fi symbol error rate is greater than the second Wi-Fi symbol error rate threshold, and the Bluetooth signal-to-noise ratio is greater than the second Bluetooth signal-to-noise ratio threshold.

In a possible implementation, the communication method further includes:
The electronic device determines, based on Wi-Fi rates corresponding to different operating modes in a process of determining the first operating mode, a Wi-Fi benefit achieved when the time division mode is switched to the parallel mode; and
uses, as the first communication indicator threshold, a communication indicator corresponding to a case that the Wi-Fi benefit is greater than a preset benefit.

In a possible implementation, the communication method further includes:

After the electronic device determines the first operating mode, when a Wi-Fi rate in the first operating mode is less than a preset Wi-Fi rate, the electronic device uses a communication indicator corresponding to the Wi-Fi rate in the first operating mode as the second communication indicator threshold.

The preset Wi-Fi rate may be the first Wi-Fi rate of the electronic device in the time division mode.

In this application, the electronic device may determine the first communication indicator threshold and the second communication indicator threshold based on the Wi-Fi rates corresponding to different operating modes. This can ensure that, when encountering a communication parameter not included in a configuration table, the electronic device can still determine related information through autonomous learning, and add the related information to a corresponding configuration table after the learning is completed, so that the related information can be quickly found from the configuration table, and learning costs are reduced.

In a possible implementation, the electronic device may upload a latest communication parameter, the first operating mode, the first communication indicator threshold, and the second communication indicator threshold to a server. The latest communication parameter includes at least one of a latest Bluetooth coding format, identification information of a latest router, and an isolation.

In this application, after updating a configuration table, the electronic device may upload an updated configuration table to the server. In this way, another electronic device can obtain the updated configuration table from the server, so that the another electronic device can quickly find a corresponding operating mode, the first communication indicator threshold, and the second communication indicator threshold from the updated configuration table, and the another electronic device no longer needs to determine whether the electronic device meets the second preset condition. This effectively simplifies a processing process, and improves processing efficiency of the electronic device.

In this application, the electronic device may upload an updated first configuration table to the server periodically or in real time. Periodical uploading can avoid resource overheads caused by uploading the first configuration table each time the first configuration table is updated.

According to a second aspect, this application provides an electronic device. The electronic device includes a display, a memory, a Bluetooth module, a Wi-Fi module, and one or more processors. The display, the memory, the Bluetooth module, and the Wi-Fi module are coupled to the processor. The Bluetooth module is configured to perform Bluetooth communication, the Wi-Fi module is configured to perform Wi-Fi communication, the display is configured to display an image generated by the processor, the memory is configured to store computer program code, and the computer program code includes computer instructions. When the processor executes the computer instructions, the electronic device is enabled to perform the foregoing method.

According to a third aspect, this application provides a computer-readable storage medium, including computer instructions. When the computer instructions are run on an electronic device, the electronic device is enabled to perform the foregoing method.

According to a fourth aspect, this application provides a computer program product. When the computer program product is run on an electronic device, the electronic device is enabled to perform the foregoing method.

According to a fifth aspect, a chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the foregoing method.

It can be understood that, for beneficial effects that can be achieved by the electronic device in the second aspect, the computer storage medium in the third aspect, the computer program product in the fourth aspect, and the chip in the fifth aspect, reference may be made to the beneficial effects in the first aspect and any possible design manner of the first aspect. Details are not described herein again.

### BRIEF DESCRIPTION OF DRAWINGS

FIG. 1 is a schematic diagram of a hardware structure of an electronic device according to an embodiment of this application;
FIG. 2 is a block diagram of a structure of a communication system according to an embodiment of this application;
FIG. 3 is a schematic diagram 1 of a scenario of Bluetooth communication and Wi-Fi communication according to an embodiment of this application;
FIG. 4 is a schematic diagram 2 of a scenario of Bluetooth communication and Wi-Fi communication according to an embodiment of this application;
FIG. 5 is a schematic diagram 3 of a scenario of Bluetooth communication and Wi-Fi communication according to an embodiment of this application;
FIG. 6 is a schematic diagram 1 of a shared antenna according to an embodiment of this application;
FIG. 7 is a schematic diagram 2 of a shared antenna according to an embodiment of this application;
FIG. 8 is a schematic diagram of independent antennas according to an embodiment of this application;
FIG. 9 is a schematic flowchart 1 of a communication method according to an embodiment of this application;
FIG. 10 is a schematic flowchart 2 of a communication method according to an embodiment of this application; and
FIG. 11 is a schematic flowchart 3 of a communication method according to an embodiment of this application.

### DESCRIPTION OF EMBODIMENTS

In the following descriptions, the terms "first" and "second" are merely intended for description, and shall not be construed as indicating or implying relative importance or implicitly indicating a quantity of indicated technical features. Therefore, a feature defined by "first" or "second" may explicitly or implicitly include one or more features. In descriptions of embodiments, "a plurality of" means two or more, unless otherwise specified.

The following describes technical solutions in this application with reference to accompanying drawings.

The technical solutions in the embodiments of this application are applied to various electronic devices that can support a Wi-Fi communication mode and a Bluetooth communication mode. For example, the electronic device may be a mobile phone, a smart watch, a smart band, a tablet computer, a desktop computer, or a laptop computer. A specific type of the electronic device is not limited in the embodiments of this application.

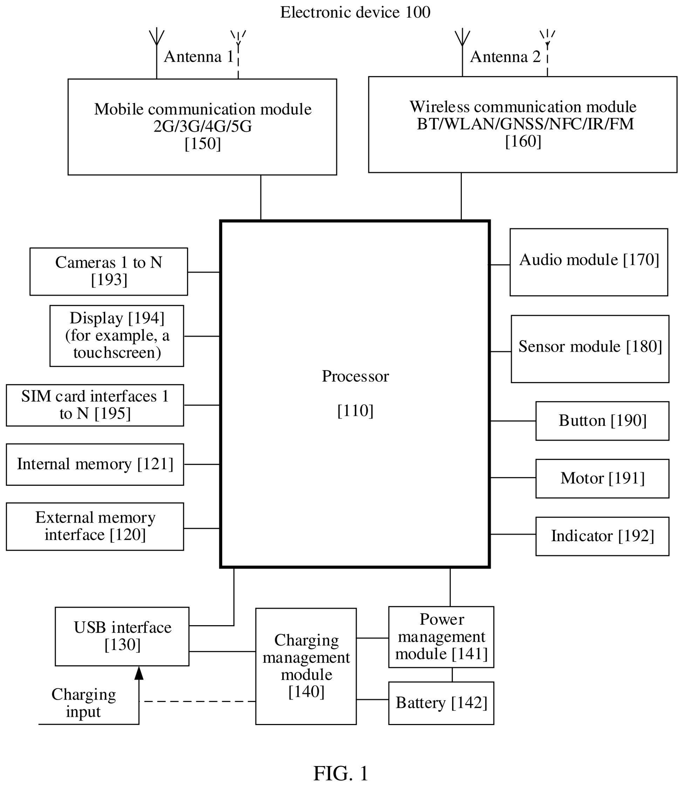

FIG. 1 is a schematic diagram of a hardware structure of an electronic device 100 according to an embodiment of this application. As shown in FIG. 1, the electronic device 100 may include a processor 110, an antenna 1, an antenna 2, a mobile communication module 150, a wireless communication module 160, an audio module 170, a sensor module 180, an external memory interface 120, an internal memory 121, a universal serial bus (universal serial bus, USB) interface 130, a charging management module 140, a power management module 141, a battery 142, a button 190, a motor 191, an indicator 192, cameras 1 to N 193, a display 194, subscriber identity module (subscriber identification module, SIM) card interfaces 1 to N 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It can be understood that the structure shown in this embodiment of the present invention does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate components, or may be integrated into one or more processors.

The controller may be a nerve center and a command center of the electronic device 100. The controller may generate an operation control signal based on an instruction operation code and a time sequence signal, to control instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and the like.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal obtained through modulation by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

In this embodiment of this application, the mobile communication module may also be referred to as a cellular module, and the mobile communication module may alternatively be described as a cellular module.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (which is not limited to a speaker, a receiver, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert an amplified signal into an electromagnetic wave for radiation through the antenna 2. In some embodiments, at least some functional modules of the wireless communication module 160 may be disposed in the processor 110.

The wireless communication module 160 may include a Bluetooth module and a Wi-Fi module. The Bluetooth module is configured to implement a Bluetooth communication mode, to be specific, enable the electronic device 100 to perform communication in the Bluetooth communication mode. The Wi-Fi module is configured to implement a Wi-Fi communication mode, to be specific, enable the electronic device 100 to perform communication in the Wi-Fi communication mode.

In some embodiments, the Bluetooth module and the Wi-Fi module may operate through time division by using a same antenna, or the Bluetooth module and the Wi-Fi module may operate in parallel by using no antenna.

For example, operating frequency bands of the Bluetooth module and the Wi-Fi module may be different, or may overlap, for example, are the same. In other words, operating frequency bands of the electronic device 100 during Bluetooth communication and Wi-Fi communication may be different, or may overlap. For example, operating modules of the Bluetooth module and the Wi-Fi module are both 2.4 GHz. For example, an operating bandwidth of the Wi-Fi communication is 40 MHz, 20 MHz, or another value. This is not limited in this application. The operating bandwidth herein is a bandwidth of a frequency band, to be specific, a transmit frequency width of a router to which the electronic device 100 is connected for implementing the Wi-Fi communication.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some embodiments, the Bluetooth module and the Wi-Fi module of the wireless communication module 160 may share one antenna, to implement the Bluetooth communication and the Wi-Fi communication in a time-division multiplexing mode.

In some embodiments, the Bluetooth module in the wireless communication module 160 and the mobile communication module 150 share one antenna, to simultaneously implement the Bluetooth communication and the Wi-Fi communication.

It can be understood that an interface connection relationship between the modules in this embodiment of the present invention is merely an example for description, and does not constitute a limitation on a structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive charging input from a charger. When charging the battery 142, the charging management module 140 may further supply power to the electronic device 100 through the power management module 141.

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. The camera 193 is configured to capture a still image or a video. In some embodiments, the electronic device 100 may include one or N cameras 193, where N is a positive integer greater than 1.

The digital signal processor is configured to process a digital signal, and may process other digital signals in addition to a digital image signal. For example, when the electronic device 100 selects a frequency, the digital signal processor is configured to perform Fourier transformation and the like on frequency energy.

The electronic device 100 may implement an audio function, for example, music playing and recording, through the audio module 170, the speaker, the receiver, a microphone, a headset jack, the application processor, and the like.

The audio module 170 is configured to convert digital audio information into an analog audio signal for output, and is also configured to convert analog audio input into a digital audio signal.

The speaker, also referred to as a "loudspeaker", is configured to convert an electrical audio signal into a sound signal. The electronic device 100 may be used to listen to music or answer a call in a hands-free mode through the speaker.

The receiver, also referred to as an "earpiece", is configured to convert an electrical audio signal into a sound signal. When a call is answered or voice information is received through the electronic device 100, the receiver may be put close to a human ear to listen to a voice.

The microphone, also referred to as a "mike" or a "mic", is configured to convert a sound signal into an electrical signal.

The headset jack is used for connecting a wired headset. The headset jack may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The external memory interface 120 may be used for connecting an external storage card, for example, a micro SD card, to extend a storage capability of the electronic device 100.

The internal memory 121 may be configured to store computer-executable program code. The executable program code includes instructions. The processor 110 runs the instructions stored in the internal memory 121 to perform various function applications and data processing of the electronic device 100. The internal memory 121 may include a program storage area and a data storage area. The program storage area may store an operating system, an application for at least one function (for example, a sound playing function or an image playing function), and the like. The data storage area may store data (for example, audio data and an address book) and the like that are created during use of the electronic device 100. In addition, the internal memory 121 may include a high-speed random access memory, or may include a non-volatile memory, for example, at least one magnetic disk storage device, a flash memory, or a universal flash storage (universal flash storage, UFS).

The button 190 includes a power button, a volume button, and the like. The button 190 may be a mechanical button or a touch button. The electronic device 100 may receive input on the button, and generate button signal input related to user settings and function control of the electronic device 100.

The motor 191 may generate a vibration prompt. The motor 191 may be configured to provide an incoming call vibration prompt or a touch vibration feedback. The indicator 192 may be an indicator light, and may be configured to indicate a charging status and a battery level change, or may be configured to indicate a message, a missed call, a notification, and the like.

The SIM card interface 195 is used for connecting a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1.

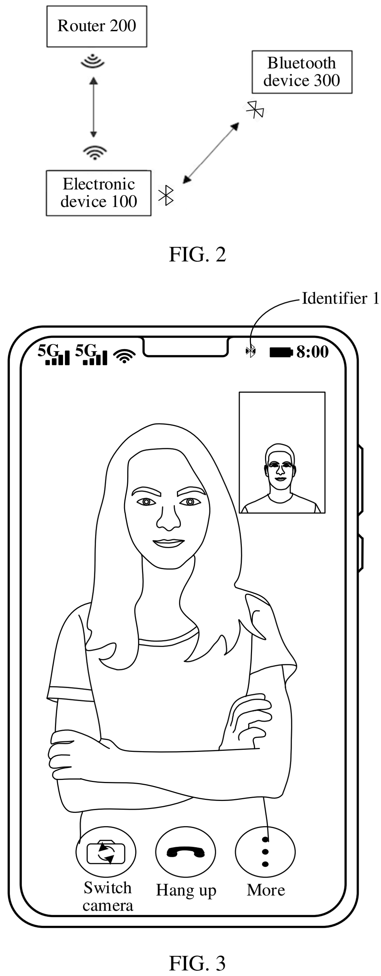

FIG. 2 is a block diagram of a structure of a communication system according to an embodiment of this application. As shown in FIG. 2, the communication system may include an electronic device 100, a router 200, and a Bluetooth device 300. The electronic device 100 may access a Wi-Fi signal of the router 200, and the electronic device 100 may be connected to the Bluetooth device 300 in a Bluetooth communication mode. The electronic device 100 may perform communication in both the Bluetooth communication mode and a Wi-Fi communication mode. For example, during Internet access in the Wi-Fi communication mode based on the router 200, the electronic device 100 may communicate (for example, perform data transmission) with the Bluetooth device 300 in the Bluetooth communication mode. For another example, during communication with the Bluetooth device 300 in the Bluetooth communication mode, the electronic device 100 may access the Internet in the Wi-Fi communication mode based on the router 200.

The Bluetooth device 300 may be any device that can implement a Bluetooth connection. For example, the Bluetooth device 300 may be a mobile phone, a smart watch, a smart band, a tablet computer, a desktop computer, a laptop computer, a Bluetooth gamepad, a Bluetooth headset, a Bluetooth sound box, a Bluetooth desk lamp, or Bluetooth augmented reality (augmented reality, AR) glasses.

In an example, the electronic device 100 is a mobile phone, and the Bluetooth device 300 is a Bluetooth headset. After the mobile phone is connected to the Bluetooth headset in the Bluetooth communication mode, an identifier 1 shown in FIG. 3 may be displayed. The mobile phone performs a video call with a peer end in the Wi-Fi communication mode. For example, in the Wi-Fi communication mode, the mobile phone may send audio/video data of the mobile phone side to the peer end, and receive audio/video data of the peer end side that is sent by the peer end. In addition, the Bluetooth headset connected to the mobile phone may play sound data of the peer end side and capture sound data of the mobile phone side. Herein, the mobile phone uses both the Bluetooth communication mode and the Wi-Fi communication mode.

In an example, the electronic device 100 is a mobile phone, and the Bluetooth device 300 is a Bluetooth gamepad. After the mobile phone is connected to the Bluetooth gamepad in the Bluetooth communication mode, the mobile phone can control a virtual person on a game picture to execute a corresponding instruction. In the game scenario, control data of the Bluetooth gamepad needs to be transmitted to the mobile phone in the Bluetooth communication mode, and the mobile phone needs to obtain game picture data in the Wi-Fi communication mode and display the game picture data.

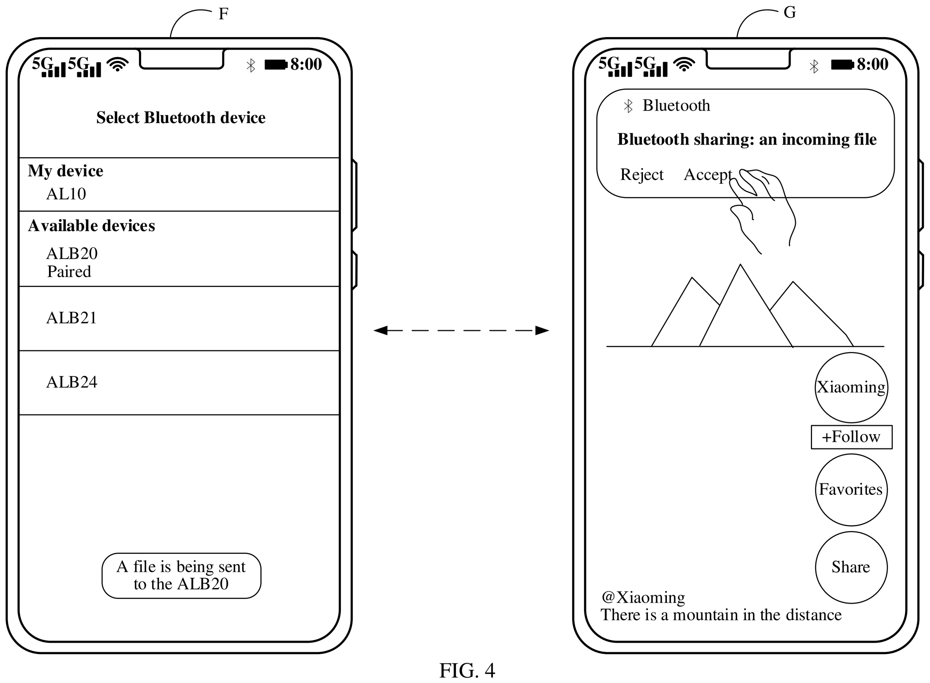

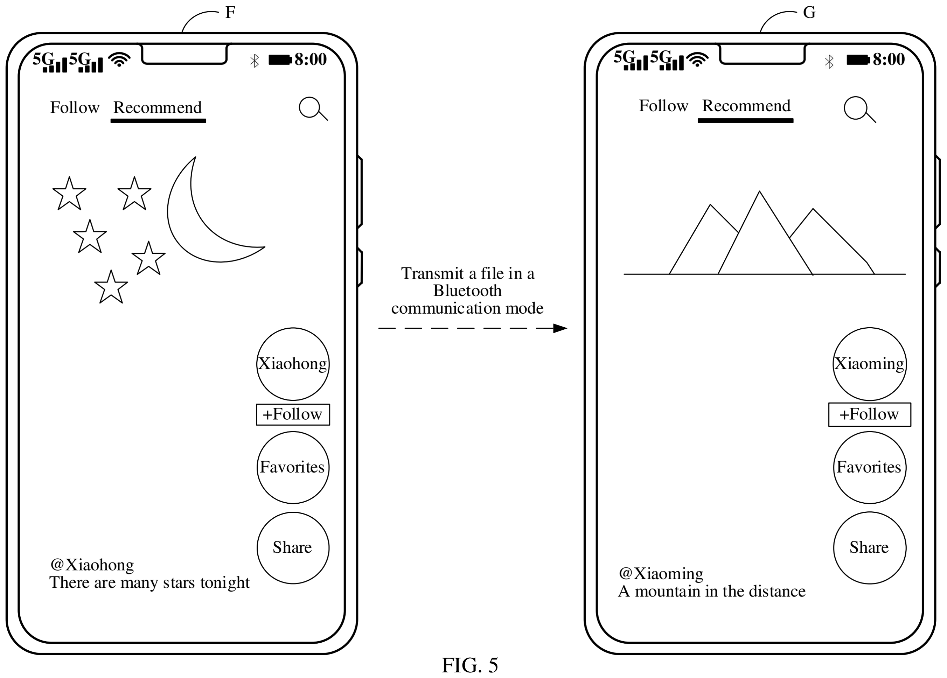

In another example, an example in which the electronic device 100 is a mobile phone F and the Bluetooth device 300 is a mobile phone G is used for description. The mobile phone F may perform a Bluetooth connection to any device with Bluetooth enabled. In a process in which the mobile phone F uses a TikTok TM application in the Wi-Fi communication mode, the mobile phone F needs to transmit a file to the mobile phone G (for example, ALB20) in the Bluetooth communication mode, and the mobile phone F may first be paired with the mobile phone G. Then, as shown in FIG. 4, after the pairing is completed, the mobile phone F may send a file transmission request to the mobile phone G, and the following pop-up window may be displayed on the mobile phone G: "Bluetooth sharing: an incoming file". In response to a trigger operation performed by a user on an Accept control in the pop-up window, the mobile phone G may receive a file transmitted by the mobile phone F in the Bluetooth communication mode (as shown in FIG. 5).

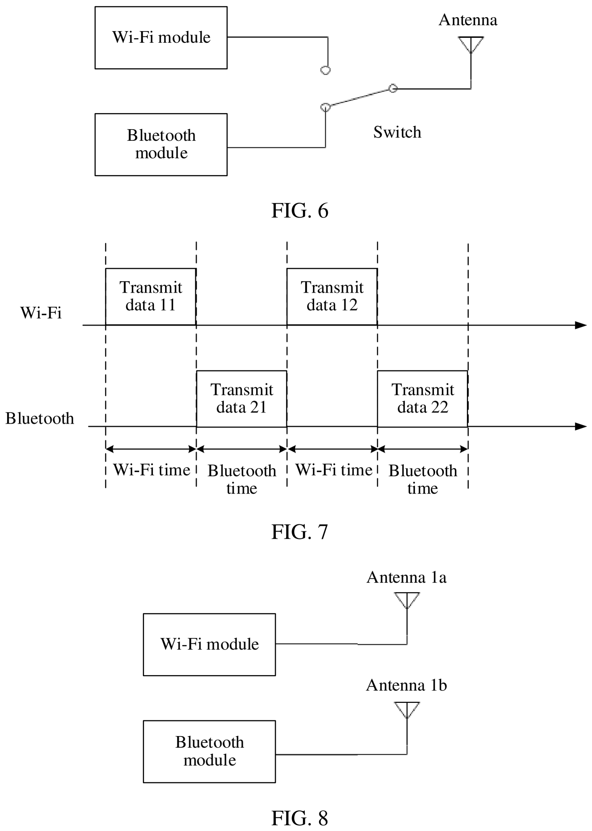

In a process in which the electronic device 100 performs communication in the Wi-Fi communication mode and the Bluetooth communication mode, the electronic device may perform Bluetooth communication and Wi-Fi communication in a time division mode. To be specific, the Bluetooth module and the Wi-Fi module in the electronic device may operate through time division by reusing one antenna, for example, reusing one antenna through time division based on a switch in the electronic device. Specifically, as shown in FIG. 6, when a path of the switch in the electronic device is connected to the Bluetooth module, the antenna sends/receives a Bluetooth signal, the Bluetooth module operates, in other words, is in an operating state, and the electronic device may perform Bluetooth communication; or when a path of the switch is conducted to the Wi-Fi module, the antenna sends/receives a Wi-Fi signal, the Wi-Fi module operates, in other words, is in an operating state, and the electronic device may perform Wi-Fi communication. It can be learned that, during reuse of one antenna, the Wi-Fi module or the Bluetooth module in the electronic device 100 cannot operate continuously, but operates through time division. As shown in FIG. 7, the Wi-Fi module may operate (for example, transmit data 11 and transmit data 12) within a Wi-Fi time period (or described as a first time period), and the Bluetooth module does not operate within the Wi-Fi time period. After the Wi-Fi time period ends and a Bluetooth time period is entered, the Bluetooth module may operate (for example, transmit data 21 and transmit data 22), and the Wi-Fi module may not operate. It can be learned that the Wi-Fi module and the Bluetooth module operate through time division, in other words, operate alternately. In other words, the Bluetooth module or the Wi-Fi module transmits data only within an operating time period of the Bluetooth module or the Wi-Fi module, and does not transmit data within other time. To be specific, within a same time period, the electronic device 100 can only transmit Bluetooth data (or described as performing Bluetooth communication) or transmit Wi-Fi data (or described as performing Bluetooth communication). The Bluetooth module and the Wi-Fi module alternately occupy time-domain resources, in other words, alternately occupy antenna resources.

However, in a process in which the electronic device performs Wi-Fi communication and Bluetooth communication in the time division mode, the Wi-Fi module and the Bluetooth module in the electronic device need to preempt antenna resources, and cannot operate continuously, to be specific, cannot continuously transmit data. Consequently, a data transmission delay is large, and real-time performance is low. However, data transmission in some scenarios has a high requirement for real-time performance, to be specific, has a high requirement for quality of the Wi-Fi communication mode/Bluetooth communication mode. If Wi-Fi communication and Bluetooth communication are performed in the time division mode, quality of the Wi-Fi communication mode/Bluetooth communication mode is low, and a user requirement cannot be met. For example, in the foregoing video call scenario, the mobile phone sends/receives audio/video data in the Wi-Fi communication mode, sends audio data to the Bluetooth headset in the Bluetooth communication mode, and receives audio data captured by the Bluetooth headset. However, because the mobile phone performs Bluetooth communication and Wi-Fi communication in the time division mode, the electronic device cannot send/receive audio/video data in real time within some time. This causes frame freezing of sound or a picture. For another example, in the foregoing game scenario, the mobile phone cannot perform Wi-Fi communication through the antenna within some time. Consequently, the mobile phone cannot obtain game picture data in real time within the time, causing frame freezing of the game picture.

In some embodiments, to avoid low real-time performance of data transmission caused by performing transmission through time division by reusing an antenna by the Wi-Fi module and the Bluetooth module, that is, to ensure Wi-Fi communication quality and/or Bluetooth communication quality, the electronic device may include a first antenna (or referred to as a Wi-Fi antenna) and a second antenna. The Bluetooth module in the electronic device performs communication by using the second antenna, the Wi-Fi module performs communication by using the Wi-Fi antenna, and the Bluetooth module performs Bluetooth communication by using an antenna independent of the Wi-Fi antenna. In this way, the electronic device can perform Bluetooth communication and Wi-Fi communication in parallel by using different antennas. As shown in FIG. 8, the Wi-Fi module performs Wi-Fi communication by using an antenna 1a (namely, the first antenna), and the Bluetooth module performs Bluetooth communication by using an antenna 1b (namely, the second antenna). The Bluetooth module and the Wi-Fi module do not need to operate through time division, and may simultaneously operate by using different antennas. Time-domain resources that can be respectively occupied by the Wi-Fi module and the Bluetooth module are greatly increased, in other words, duration in which data can be continuously transmitted is increased. This helps resolve a resource preemption problem. However, in some cases, the electronic device does not need to perform Bluetooth communication and Wi-Fi communication in parallel by using different antennas. Consequently, a waste of resources occurs.

It can be understood that, when space of the electronic device is sufficiently large, the electronic device may include an independent second antenna disposed for the Bluetooth module, and the antenna may be an exclusive antenna of the Bluetooth module and is configured to perform Bluetooth communication.

Alternatively, the second antenna may be, for example, a cellular antenna in the electronic device. When a cellular module in the electronic device includes a large quantity of cellular antennas, the Bluetooth module in the electronic device may perform Bluetooth communication by reusing one cellular antenna. In this way, the Bluetooth module and the Wi-Fi module in the electronic device can operate in parallel without adding an antenna, in other words, the electronic device can perform Bluetooth communication and Wi-Fi communication in parallel. This design reduces costs without additionally occupying space of the electronic device or changing a size of the electronic device, and does not affect an appearance design or product stability of the electronic device.

It should be understood that the Bluetooth module generally operates by using a frequency band of 2.4 GHz. When the electronic device performs Wi-Fi communication and Bluetooth communication in parallel by using different antennas, if an operating frequency band of the Wi-Fi module is also 2.4 GHz, the operating frequency band of the Wi-Fi module mostly overlaps an operating frequency band of the Bluetooth module. Therefore, when the Wi-Fi module operates at an operating frequency band of 2.4 GHz, if an isolation between an antenna used by the Wi-Fi module and an antenna used by the Bluetooth module is not sufficiently large, mutual transmission functions of the Wi-Fi module and the Bluetooth module affect performance of each other, and Wi-Fi communication and Bluetooth communication affect each other.

It can be understood that, during Bluetooth communication (for example, data transmission), the Bluetooth module needs to encode data based on a Bluetooth coding scheme. Different Bluetooth coding schemes may correspond to different coding rates. For example, as shown in Table 1, a coding rate (or referred to as a bit rate) of advanced audio coding (advanced audio coding, AAC) may range from 128 kbps to 392 kbps, and a coding rate of LDAC may range from 330 kbps to 990 kbps.

**Table 1**

| Codec (codec) | Sampling rate (sampling rate) | Bit rate (bit rate) | Frame length (frame length) | Total harmonic distortion+ noise (thd+N) | Signal-to-noise ratio (SNR) |
|---|---|---|---|---|---|
| SBC | 16K to 48K | 345 kbps | 20 ms | > -80 dB | - |
| AAC | 8k to 48k | 128 kbps to 392 kbps | 20 ms | > -80 dB | - |
| aptX | 16K to 48K | 384 kbps | 15 ms | -85 dB | 93 dB |
| aptX-HD | 16K to 48K | 576 kbps | 15 ms | -90 dB | 129 dB |
| aptX-adaptive | 16K to 48K | 276 kbps to 420 kbps | 15 ms/10 ms | -90 dB | 135 dB |
| LDAC | 16K to 96K | 330 kbps to 990 kbps | 20 ms | -125 dB | - |
| LHDC | 16K to 96K | 256 kbps to 900 kbps | 20 ms/12 ms | -141 dB | - |
| LC3 | 8K to 48K | 16 kbps to 392 kbps | 10 ms/7.5 ms | - | - |
| LC3Plus | 48K to 96K | 125 kbps to 400 kbps | 10 ms/5 ms/2.5 ms | -135 dB | 142 dB |

For example, it can be learned from Table 1 that the Bluetooth coding scheme may include the sub-band coding (sub-band coding, SBC), the AAC, the aptX, the aptX-HD, the aptX-adaptive, the LDAC, the LHDC, the LC3, the LC3Plus, and the like. The SBC is applicable to a low-rate audio scenario, for example, a voice call scenario. The AAC and the LDAC are both applicable to a high-rate audio scenario, for example, a music scenario, a game scenario, or a video call scenario. Certainly, the Bluetooth coding schemes shown in Table 1 are merely examples, and the Bluetooth module may alternatively encode data by using another Bluetooth coding scheme. This is not limited in this application.

The sampling rate (also referred to as a sampling speed or a sampling frequency) indicates a quantity of samples that are extracted from a continuous signal (an analog signal) and that form a discrete signal (a digital signal) within unit time. The bit rate indicates a rate at which a signal is processed or transmitted by a system, to be specific, an amount of data processed or transmitted within unit time. It can be understood that a higher bit rate indicates clearer sound. The total harmonic distortion+noise (Total Harmonic Distortion+Noise, THD+N) is a main performance indicator of an audio power amplifier and is also a condition of a rated output power of the audio power amplifier, and is used for indicating a degree of distortion of sound after amplification. The signal-to-noise ratio is a ratio of a strength of a received wanted signal to a strength of a received interference signal (noise and interference).

It should be noted that a higher Bluetooth coding rate (equivalent to the bit rate in Table 1) indicates a higher Bluetooth transmit power and a longer Bluetooth transmission time. Consequently, Bluetooth causes worse impact to Wi-Fi. Similarly, a higher Wi-Fi coding rate indicates a higher Wi-Fi transmit power and a longer Wi-Fi transmission time. Consequently, Wi-Fi causes worse impact to Bluetooth.

Therefore, to reduce a waste of resources and ensure communication quality, when the electronic device in this application performs Wi-Fi communication, a requirement of the electronic device to perform Wi-Fi communication and Bluetooth communication by using different antennas indicates that communication quality of the Wi-Fi communication and/or communication quality of the Bluetooth communication may be low when the electronic device performs Wi-Fi communication and Bluetooth communication. Therefore, to improve communication quality and avoid a waste of resources, the electronic device may determine whether a current communication indicator (namely, a latest communication indicator) of the electronic device meets a second preset condition, to be specific, determine whether the electronic device needs to enter an independent transmission state, in other words, determine whether communication quality of the Wi-Fi communication and/or communication quality of the Bluetooth communication of the electronic device are/is low. The current communication indicator of the electronic device meeting the second preset condition indicates that communication quality of the Wi-Fi communication and/or communication quality of the Bluetooth communication of the electronic device are/is low, and the electronic device may perform Bluetooth communication and Wi-Fi communication in a parallel mode by using different antennas, in other words, the electronic device may enter the independent transmission state, to ensure communication quality. That the current communication indicator of the electronic device does not meet the second preset condition indicates that communication quality of the electronic device is high, and the electronic device may continue to perform Bluetooth communication and Wi-Fi communication in a time division mode by using one antenna, to avoid an unnecessary parallel mode and reduce a waste of resources.

It should be noted that a 2.4 GHz wireless technology is a short-range wireless transmission technology. The 2.4 GHz is an operating frequency band, and a larger use range and a stronger anti-interference capability can be achieved through operating at the frequency band of 2.4 GHz. It should be noted that the 2.4 GHz actually does not correspond to a specific value, but corresponds to a range. For example, a frequency range of the operating frequency band of 2.4 GHz is 2.4 GHz to 2.48 GHz. Operating frequency bands of the Bluetooth module and the Wi-Fi module may both include the frequency band of 2.4 GHz.

For ease of description, the following continues to describe the embodiments of this application in detail by using an example in which the operating frequency bands of the Wi-Fi module and the Bluetooth module in the electronic device are 2.4 GHz and an operating bandwidth of the Wi-Fi module includes 40 MHz and/or 20 MHz.

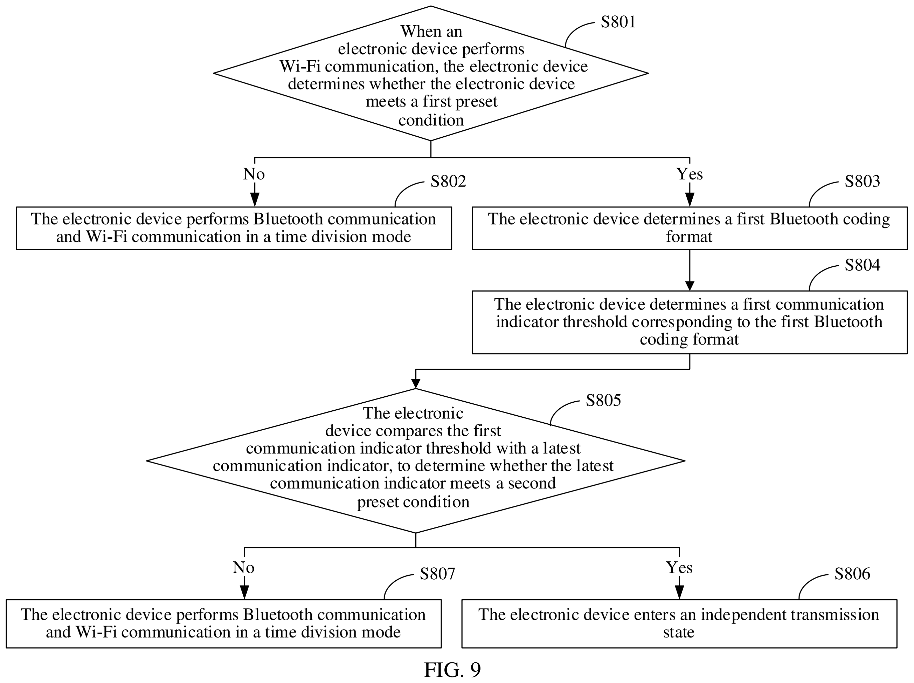

FIG. 9 is a flowchart of a communication method according to an embodiment of this application. The communication method may be performed by an electronic device, for example, may be performed a processor or a chip in the electronic device. For ease of description, the communication method is described in detail by using the electronic device as an example.

S801: When the electronic device performs Wi-Fi communication, the electronic device determines whether the electronic device meets a first preset condition.

It can be understood that the electronic device performs Bluetooth communication and Wi-Fi communication by using a first antenna when the electronic device meets the first preset condition. The first preset condition indicates that the electronic device needs to use (in other words, should use) an exclusive antenna to perform Bluetooth communication, in other words, the electronic device has a requirement of entering an independent Bluetooth transmission state. The independent Bluetooth transmission state indicates a condition that the electronic device may perform Bluetooth communication and Wi-Fi communication in a parallel mode, to be specific, an antenna used by the electronic device to perform Bluetooth communication and an antenna used by the electronic device to perform Wi-Fi communication may not be the same, in other words, an antenna used by a Bluetooth module in the electronic device is different from an antenna used by a Wi-Fi module in the electronic device.

For example, the first preset condition indicates that quality of the Wi-Fi communication and/or quality of the Bluetooth communication of the electronic device are/is low. The first preset condition may include that the electronic device starts to perform Bluetooth communication, or a communication quality value of a target communication mode of the electronic device is less than a preset quality value in a process in which the electronic device performs Bluetooth communication and Wi-Fi communication in a time division mode. The target communication mode includes a Wi-Fi communication mode and/or a Bluetooth communication mode. In this application, the starting to perform Bluetooth communication means that Bluetooth switches from an off state to a scanning state, a pairing state, or another state in which the Bluetooth module needs to perform Bluetooth communication by using an antenna (for example, the electronic device is successfully connected to another device).

In an example, the first preset condition may include that the electronic device starts to perform Bluetooth communication. In a process in which the electronic device performs Wi-Fi communication but does not perform Bluetooth communication, when the electronic device starts to perform Bluetooth communication, to ensure communication quality and avoid mutual interference between the Bluetooth communication and the Wi-Fi communication, the electronic device may have a requirement of entering the independent Bluetooth transmission state, in other words, the electronic device meets the first preset condition. If the electronic device does not start Bluetooth communication, the electronic device does not meet the first preset condition.

In another example, the first preset condition includes that the communication quality value of the target communication mode is less than the preset quality value in the process in which the electronic device performs Bluetooth communication and Wi-Fi communication in the time division mode. In the process in which the electronic device performs Wi-Fi communication and Bluetooth communication in the time division mode, a communication quality value of the Wi-Fi communication mode and/or a communication quality value of the Bluetooth communication mode being greater than or equal to the preset quality value indicates that transmission performance of the electronic device in the time division mode is good. The electronic device may continue to perform Bluetooth communication and Wi-Fi communication in the time division mode, and the electronic device does not have a requirement of performing Bluetooth communication and Wi-Fi communication in the parallel mode, in other words, does not have a requirement of entering an independent transmission state. The electronic device does not meet the first preset condition. If a communication quality value of the Wi-Fi communication mode or the Bluetooth communication mode is less than the preset quality value, the electronic device has a requirement of entering an independent transmission state, the electronic device has a requirement of performing Bluetooth communication and Wi-Fi communication in the parallel mode, and the electronic device meets the first preset condition.

In some embodiments, the communication quality value may include a rate, and correspondingly, the preset quality value may include a preset rate. For example, the target communication mode includes the Wi-Fi communication mode. In a process in which the electronic device performs Wi-Fi communication and Bluetooth communication in the time division mode, a Wi-Fi rate of the electronic device being higher than or equal to the preset rate indicates that Wi-Fi communication quality and transmission performance of the electronic device in the time division mode are good. Therefore, the electronic device can determine that the electronic device does not need to enter the independent Bluetooth transmission state, and the electronic device does not meet the first preset condition and therefore does not need to use one more antenna for communication, so that an unnecessary waste of resources can be reduced. A Wi-Fi rate of the electronic device being lower than the preset rate indicates that Wi-Fi communication quality and transmission performance of the electronic device in the time division mode are poor. Therefore, to attempt to obtain good Wi-Fi transmission performance, the electronic device determines that the electronic device has a requirement of entering the independent Bluetooth transmission state, and the electronic device meets the first preset condition.

It should be understood that the rate is only an example parameter of the communication quality value, and the electronic device may alternatively use another parameter to represent the communication quality value. For example, the another parameter may include a received signal strength (received signal strength indicator, RSSI), a transmit power, a symbol error rate, or a signal-to-noise ratio. To be specific, when the electronic device meets the following condition, the electronic device may determine that the communication quality value of the target communication mode is less than the preset quality value, and communication quality of the target communication mode may be poor. The condition includes one or more of the following conditions: A rate of the target communication mode is greater than or equal to the preset rate, a received signal strength of the target communication mode is greater than a preset received signal strength, a transmit power of the target communication mode is greater than or equal to a preset transmit power, a symbol error rate of the target communication mode is less than or equal to a preset symbol error rate, and a signal-to-noise ratio of the target communication mode is greater than or equal to a preset signal-to-noise ratio.

The transmit power is a strength of a signal transmitted by the electronic device to a base station. To be specific, when the electronic device is far away from a router, a Wi-Fi transmit power is high; or when a Bluetooth device is far away from the electronic device, a Bluetooth transmit power is high. The symbol error rate (SER) is an indicator for measuring data transmission accuracy of data within specified time.

It should be noted that initial operating modes of the Wi-Fi communication and the Bluetooth communication are both the time division mode. In this operating mode, the electronic device performs Wi-Fi communication and Bluetooth communication through time division by reusing an antenna. An operating bandwidth of the Wi-Fi communication in the time division mode may be 40 MHz or 20 MHz. This is not specifically limited.

In this embodiment of this application, when the electronic device does not meet the first preset condition, it is determined that the electronic device does not have a requirement of entering the independent transmission state, and the electronic device performs S802; or when the electronic device meets the first preset condition, it is determined that the electronic device needs to determine whether to enter the independent transmission state, and the electronic device may perform S803.

S802: The electronic device performs Bluetooth communication and Wi-Fi communication in the time division mode.

Specifically, if the electronic device does not meet the first preset condition, it is determined that the electronic device is to perform Bluetooth communication and Wi-Fi communication in the time division mode.

S803: The electronic device determines a first Bluetooth coding format.

The first Bluetooth coding format indicates a coding format corresponding to the Bluetooth communication mode used by the electronic device, that is, a coding format used for Bluetooth communication. It can be understood that, after determining that a communication status of the electronic device meets the first preset condition, the electronic device may determine that the electronic device has a requirement of performing Bluetooth communication by exclusively occupying an antenna. Therefore, the electronic device may determine, by using the first Bluetooth coding format, whether the electronic device needs to continue to perform Bluetooth communication by exclusively occupying an antenna, that is, whether to enter the independent transmission state.

It should be understood that, when it is determined that the electronic device meets the first preset condition, if the electronic device does not use a Bluetooth coding format, the electronic device may detect, periodically or in real time, whether the electronic device uses a Bluetooth coding format, and stops detection when detecting that the electronic device encodes data by using a Bluetooth coding format. The detected Bluetooth coding format may be the first Bluetooth coding format. For example, the electronic device may encode data by using the Bluetooth coding format only when transmitting service data to another device. Therefore, when it is determined that the electronic device meets the first preset condition, if the electronic device is currently in the scanning state and has not transmitted service data to another device, the electronic device cannot obtain a Bluetooth coding format, and therefore the electronic device may continue to perform detection. When the electronic device starts to transmit service data to another device by using a Bluetooth coding format, the Bluetooth coding format may be the first Bluetooth coding format. It can be learned that the first Bluetooth coding format in this application may be a Bluetooth coding format that is newly determined by the electronic device when the electronic device meets the first preset condition.

In some possible implementations, the first Bluetooth coding format may include a first Bluetooth coding scheme, for example, SBC, AAC, aptX, LDAC, or LHDC.

In some other possible implementations, the first Bluetooth coding format may include a first Bluetooth coding scheme and a coding rate corresponding to the first Bluetooth coding scheme, for example, LDAC 990 kbps. Certainly, the first Bluetooth coding format may alternatively include another format. This is not limited in this application.

It can be understood that different Bluetooth coding schemes may correspond to different coding rates. Coding rates corresponding to some Bluetooth coding schemes (for example, the SBC) may be a value, and coding rates corresponding to some Bluetooth coding schemes may be a range. Ranges of coding rates corresponding to some Bluetooth coding schemes (for example, the LDAC) may be large, and ranges of coding rates corresponding to some Bluetooth coding schemes (for example, the AAC) may be small. Therefore, for a Bluetooth coding scheme with a large coding rate range, the first Bluetooth coding format may include a first Bluetooth coding scheme and a coding rate corresponding to the first Bluetooth coding scheme; and for a Bluetooth coding scheme with a small coding rate range and a Bluetooth coding scheme with a coding rate being a value, the first Bluetooth coding format may include only a first Bluetooth coding scheme.

S804: The electronic device determines a first communication indicator threshold corresponding to the first Bluetooth coding format.

Specifically, after determining the first Bluetooth coding format (namely, a latest Bluetooth coding format), the electronic device may determine the first communication indicator threshold corresponding to the first Bluetooth coding format from a second configuration table. The first communication indicator threshold is a threshold for entering the independent transmission state. The second configuration table may include at least one Bluetooth coding format and a communication indicator threshold corresponding to each of the at least one Bluetooth coding format.

It should be noted that the first communication indicator threshold is preset based on a value of a Wi-Fi benefit. The benefit is a degree of improvement of a Wi-Fi rate when the electronic device switches from performing Bluetooth communication and Wi-Fi communication in the time division mode to performing Bluetooth communication and Wi-Fi communication in a parallel mode (or briefly described as that an operating mode of the electronic device switches from the time division mode to the parallel mode). A higher Wi-Fi benefit indicates better improvement effect of the Wi-Fi rate.

In some embodiments, a communication indicator includes a Wi-Fi received signal strength, and a communication indicator threshold includes a Wi-Fi received signal strength threshold.

In some other embodiments, certainly, the Wi-Fi received signal strength is merely an example, the communication indicator may alternatively not include the Wi-Fi received signal strength, and the communication indicator may include at least one of the following indicators: a Wi-Fi transmit power, a Wi-Fi symbol error rate, a Bluetooth transmit power, a Bluetooth received signal strength, a Bluetooth symbol error rate, and a Wi-Fi signal-to-noise ratio. To be specific, the communication indicator may alternatively not include the Wi-Fi received signal strength, and may include at least one of the following indicators: the Wi-Fi received signal strength, the Wi-Fi transmit power, the Wi-Fi symbol error rate, the Wi-Fi signal-to-noise ratio, the Bluetooth transmit power, the Bluetooth received signal strength, the Bluetooth symbol error rate, and a Bluetooth signal-to-noise ratio. Correspondingly, the communication indicator threshold may alternatively include at least one of the following indicator thresholds: the Wi-Fi received signal strength threshold, a Wi-Fi transmit power threshold, a Wi-Fi symbol error rate threshold, a Wi-Fi signal-to-noise ratio threshold, a Bluetooth transmit power threshold, a Bluetooth received signal strength threshold, a Bluetooth symbol error rate threshold, and a Bluetooth signal-to-noise ratio threshold. The communication indicator threshold is in a one-to-one correspondence with the communication indicator.

For example, a higher Wi-Fi received signal strength indicates a higher Wi-Fi rate and a higher Wi-Fi benefit. The Wi-Fi received signal strength may affect the Wi-Fi benefit. As shown in Table 2, the electronic device plays music of the electronic device in the Bluetooth communication mode through a Bluetooth headset, and implements the Wi-Fi communication mode by accessing a router A. When the Wi-Fi received signal strength is greater than -45 dB, the Wi-Fi rate is the highest, and the Wi-Fi benefit is the best. When the Wi-Fi received signal strength ranges from -70 dB to -72 dB, the Wi-Fi rate is the lowest, and the Wi-Fi benefit is the worst. Compared with a case in which the Bluetooth coding format is the ACC, when the Bluetooth coding format is the LDAC and the coding rate is 330 kbps and 990 kbps, the Wi-Fi benefit is the best. Therefore, a communication indicator threshold corresponding to the Bluetooth coding format LDAC is greater than a communication indicator threshold corresponding to the Bluetooth coding format AAC.

In some embodiments, a Wi-Fi received signal strength threshold in a case in which the Bluetooth coding format is the LDAC and the coding rate is 990 kbps may be set to -60 dB, and a Wi-Fi received signal strength threshold in a case in which the Bluetooth coding format is the AAC may be set to -70 dB.

In some embodiments, an operating bandwidth corresponding to the router A in a test scenario shown in Table 2 is 20 MHz, and an operating bandwidth corresponding to the Wi-Fi communication mode of the electronic device is 20 MHz. A distance between the electronic device and the router A is 20 cm.

**Table 2**

| | Router A | Test scenario: Connect to a Bluetooth headset to play music, at a location of 20 cm and with an operating bandwidth of 20 M | | | | | | | | |
|---|---|---|---|---|---|---|---|---|---|---|
| | Coding format | LDAC 990 kbps | | | LDAC 330 kbps | | | AAC | | |
| Wi-Fi received signal strength | Wi-Fi rate after Bluetooth is disabled | Wi-Fi rate in the time division mode | Wi-Fi rate in the parallel mode | Wi-Fi benefit | Wi-Fi rate in the time division mode | Wi-Fi rate in the parallel mode | Wi-Fi benefit | Wi-Fi rate in the time division mode | Wi-Fi rate in the parallel mode | Wi-Fi benefit |
| > -45 | 220.67 | 21 | 170.2 | 710% | 138 | 188 | 36% | 143.5 | 190.2 | 33% |
| -50 to -55 | 125.86 | 20.8 | 123.87 | 496% | 133.8 | 145.2 | 9% | 145.2 | 175.6 | 21% |
| -60 to -62 | 176.13 | 16.52 | 57.73 | 249% | 123.57 | 119.23 | -4% | 108.85 | 110.49 | 2% |
| -65 to -67 | 133.54 | 13.45 | 41.34 | 207% | 111.23 | 96 | -14% | 81.44 | 82.78 | 2% |
| -70 to -72 | 96.14 | 8.5 | | | 70.2 | | | 58.47 | 59.77 | 2% |

In some embodiments, it can be learned from Table 1 that a Bluetooth coding format has a corresponding coding rate. A higher coding rate corresponding to the Bluetooth coding format indicates a higher Bluetooth transmit power and a longer Bluetooth transmission time. Correspondingly, a Wi-Fi transmission time on the electronic device is shorter. To be specific, in the time division mode, Bluetooth communication causes larger impact on quality of Wi-Fi communication. For example, when a Bluetooth coding format corresponding to the Bluetooth communication mode of the electronic device is the LDAC and a coding rate corresponding to the LDAC is 330 kbps, Wi-Fi communication quality of the electronic device is higher than Wi-Fi communication quality achieved when the coding rate corresponding to the LDAC is 990 kbps.

Specifically, a difference between a Wi-Fi rate in a case in which the coding rate is 330 kbps and a Wi-Fi rate in a case in which the coding rate is 990 kbps is large. Therefore, when meeting the first preset condition, the electronic device may determine, by using the first Bluetooth coding format and a first coding rate corresponding to the first Bluetooth coding format, whether the electronic device is to enter the independent transmission state. The first coding rate indicates a coding rate in a case in which the electronic device uses the first Bluetooth coding format. Correspondingly, the electronic device may search, by using a related configuration table, for the first communication indicator threshold that corresponds to the first Bluetooth coding format and the first coding rate. The related configuration table may include at least one Bluetooth coding format, at least one coding rate corresponding to each Bluetooth coding format, and a first communication indicator threshold that corresponds to one Bluetooth coding format and one coding rate corresponding to the Bluetooth coding format. Herein, a coding rate of the at least one coding rate corresponding to the Bluetooth coding format in the configuration table may be a specific value or a range.

It should be noted that due to limited space of the electronic device or other reasons, a distance between antennas in the electronic device is short, and an isolation between the antennas is small. Therefore, when the electronic device performs Bluetooth communication, a signal transmitted through Bluetooth affects a received signal of another device. To be specific, a higher Bluetooth transmit power at a transmit end causes larger impact to a receive end, although the transmit end is not affected, and a Wi-Fi rate at the receive end (for example, the electronic device) is low. As shown in Table 3, when the Bluetooth transmit power is PL8, a Wi-Fi rate corresponding to a downlink of the electronic device is the highest; and when the Bluetooth transmit power is PL10, a Wi-Fi rate corresponding to the downlink is the lowest. Then the electronic device may determine that a benefit achieved when the Bluetooth transmit power is PL8 is higher than a benefit achieved when the Bluetooth transmit power is PL10. In some embodiments, in a test scenario shown in Table 3, the electronic device is connected, in the Bluetooth communication mode, to a Bluetooth headset using the coding format AAC, and music of the electronic device is played through the Bluetooth headset. An operating bandwidth corresponding to the Wi-Fi communication mode of the electronic device is 20 MHz. A distance between the electronic device and the router is 20 cm. The electronic device separately performs Bluetooth communication and Wi-Fi communication in the parallel mode.

**Table 3**

| Test scenario: Connect to a headset (AAC) to play music, at a distance of 20 cm and an operating bandwidth of 20 M and in the independent transmission state | | | |
|---|---|---|---|
| | Wi-Fi rate corresponding to a downlink | Wi-Fi rate corresponding to an uplink | Unit |
| PL8 | 145 | 101 | Mbps |
| PL9 | 135 | 112 | Mbps |
| PL10 | 127 | 103 | Mbps |

The downlink (downlink, DL) is a physical channel for transmitting a signal from a base station to a mobile station. To be specific, the downlink indicates that the electronic device receives, in the Bluetooth communication mode, data sent by another device. The uplink (uplink, UL) is a physical channel for transmitting a signal from a mobile station to a base station. To be specific, the uplink indicates that another device sends data to the electronic device in the Bluetooth communication mode.

In some embodiments, the electronic device may search a configuration table (for example, the second configuration table) for a first communication indicator threshold corresponding to a latest communication parameter, in other words, a first communication indicator threshold corresponding to a current communication parameter. For example, the latest communication parameter may include a latest Bluetooth coding format, an identifier of a latest router, a latest coding rate (or referred to as a first coding rate), a latest isolation (or referred to as a first isolation), or an operating bandwidth of the latest router. Certainly, the first communication indicator threshold may alternatively be directly a fixed value or value range. When meeting the first preset condition, the electronic device may directly obtain the first communication indicator threshold, without determining the first communication indicator threshold by using the latest communication parameter.

S805: The electronic device compares the first communication indicator threshold with a latest communication indicator, to determine whether the latest communication indicator meets a second preset condition.

For example, the electronic device determines whether the latest communication indicator meets the second preset condition. If the latest communication indicator meets the second preset condition, the electronic device may determine to enter the independent transmission state, and the electronic device may perform S806. If the latest communication indicator does not meet the second preset condition, the electronic device may perform S807.

In some embodiments, the second preset condition may include that a Wi-Fi received signal strength is greater than a first Wi-Fi received signal strength threshold.

In some other embodiments, certainly, the second preset condition including that the Wi-Fi received signal strength is greater than the first Wi-Fi received signal strength threshold is merely an example, and the second preset condition may alternatively not include that the Wi-Fi received signal strength is greater than the first Wi-Fi received signal strength threshold. To be specific, the second preset condition may include at least one of the following: The Wi-Fi received signal strength is greater than the first Wi-Fi received signal strength threshold, a Bluetooth transmit power is greater than a first Bluetooth transmit power threshold, a Bluetooth received signal strength is greater than a first Bluetooth received signal strength threshold, a Bluetooth symbol error rate is less than a first Bluetooth symbol error rate threshold, a Wi-Fi transmit power is greater than a first Wi-Fi transmit power threshold, a Wi-Fi signal-to-noise ratio is less than a first Wi-Fi signal-to-noise ratio threshold, a Wi-Fi symbol error rate is less than a first Wi-Fi symbol error rate threshold, and a Bluetooth signal-to-noise ratio is less than a first Bluetooth signal-to-noise ratio threshold.

In an example, a current communication indicator (namely, the latest communication indicator) includes a current (namely, latest) Wi-Fi received signal strength, the first communication indicator threshold includes the first Wi-Fi received signal strength threshold, and the second preset condition may include that the Wi-Fi received signal strength is greater than the first Wi-Fi received signal strength threshold. The electronic device may determine whether the latest Wi-Fi received signal strength is greater than the first Wi-Fi received signal strength threshold. The latest Wi-Fi received signal strength being greater than the first Wi-Fi received signal strength threshold indicates that a Wi-Fi benefit of the electronic device is large after the electronic device switches from the time division mode to the parallel mode. In this case, it is determined that the electronic device meets the second preset condition, and the electronic device may enter the independent transmission state. If the latest Wi-Fi received signal strength is less than or equal to the first Wi-Fi received signal strength threshold, it is determined that the electronic device does not meet the second preset condition, and the electronic device may not enter the independent transmission state.

For example, an example in which the first Wi-Fi received signal strength threshold is -60 dB is used for description. The current Wi-Fi received signal strength being -55 dB indicates that the current Wi-Fi received signal strength is greater than the Wi-Fi received signal strength threshold. Therefore, the electronic device meets the second preset condition, and may enter the independent transmission state to perform Bluetooth communication. The current Wi-Fi received signal strength being -63 dB indicates that the Wi-Fi received signal strength is less than the Wi-Fi received signal strength threshold. Therefore, the electronic device does not meet the second preset condition, and may not enter the independent transmission state to perform Bluetooth communication.

In another example, the current communication indicator includes a latest Bluetooth transmit power, the first communication indicator threshold includes the first Bluetooth transmit power threshold, and the second preset condition may include that the Bluetooth transmit power is greater than the first Bluetooth transmit power threshold. The electronic device determines whether the latest Bluetooth transmit power is greater than the first Bluetooth transmit power threshold. If the latest Bluetooth transmit power is greater than the first Bluetooth transmit power threshold, it is determined that the electronic device meets the second preset condition, and the electronic device may enter the independent transmission state to perform Bluetooth communication. If the latest Bluetooth transmit power is less than or equal to the first Bluetooth transmit power threshold, it is determined that the electronic device does not meet the second preset condition, and the electronic device may not enter the independent transmission state to perform Bluetooth communication.

In another example, the current communication indicator includes a latest Bluetooth received signal strength, the first communication indicator threshold includes the first Bluetooth received signal strength threshold, and the second preset condition may include that the Bluetooth received signal strength is greater than the first Bluetooth received signal strength threshold. The electronic device determines whether the latest Bluetooth received signal strength is greater than the first Bluetooth received signal strength threshold. If the latest Bluetooth received signal strength is greater than the first Bluetooth received signal strength threshold, it is determined that the electronic device meets the second preset condition, and the electronic device may enter the independent transmission state to perform Bluetooth communication. If the latest Bluetooth received signal strength is less than or equal to the first Bluetooth received signal strength threshold, it is determined that the electronic device does not meet the second preset condition. Therefore, the electronic device may not enter the independent transmission state to perform Bluetooth communication.

In another example, the current communication indicator includes a latest Bluetooth symbol error rate, the first communication indicator threshold includes the first Bluetooth symbol error rate threshold, and the second preset condition may include that the Bluetooth symbol error rate is less than the first Bluetooth symbol error rate threshold. The electronic device determines whether the latest Bluetooth symbol error rate is less than the first Bluetooth symbol error rate threshold. The latest Bluetooth symbol error rate being less than the first Bluetooth symbol error rate threshold indicates that the Bluetooth communication is subject to serious interference from the Wi-Fi communication, to be specific, data transmission quality of the Bluetooth module is poor. Therefore, it is determined that the electronic device meets the second preset condition, and the electronic device may enter the independent transmission state to perform Bluetooth communication. If the latest Bluetooth symbol error power is greater than or equal to the first Bluetooth symbol error rate threshold, it is determined that the electronic device does not meet the second preset condition, and the electronic device may not enter the independent transmission state to perform Bluetooth communication.

In another example, the current communication indicator includes a latest Wi-Fi transmit power, the first communication indicator threshold includes the first Wi-Fi transmit power threshold, and the second preset condition may include that the Wi-Fi transmit power is greater than the first Wi-Fi transmit power threshold. The electronic device determines whether the latest Wi-Fi transmit power is greater than the first Wi-Fi transmit power threshold. If the latest Wi-Fi transmit power is greater than the first Wi-Fi transmit power threshold, it is determined that the electronic device meets the second preset condition, and the electronic device may enter the independent transmission state to perform Bluetooth communication. If the latest Wi-Fi transmit power is less than or equal to the first Wi-Fi transmit power threshold, it is determined that the electronic device does not meet the second preset condition, and the electronic device may not enter the independent transmission state to perform Bluetooth communication.

In another example, the current communication indicator includes a latest Wi-Fi symbol error rate, the first communication indicator threshold includes the first Wi-Fi symbol error rate threshold, and the second preset condition may include that the Wi-Fi symbol error rate is less than the first Wi-Fi symbol error rate threshold. The electronic device determines whether the latest Wi-Fi symbol error rate is less than the first Wi-Fi symbol error rate threshold. The latest Wi-Fi symbol error rate being less than the first Wi-Fi symbol error rate threshold indicates that the Wi-Fi communication is subject to serious interference from the Bluetooth communication, to be specific, data transmission quality of the Wi-Fi module is poor. Therefore, it is determined that the electronic device meets the second preset condition, and the electronic device may enter the independent transmission state to perform Bluetooth communication. If the latest Wi-Fi symbol error power is greater than or equal to the first Wi-Fi symbol error rate threshold, it is determined that the electronic device does not meet the second preset condition, and the electronic device may not enter the independent transmission state to perform Bluetooth communication.

In another example, the current communication indicator includes a latest Wi-Fi signal-to-noise ratio, the first communication indicator threshold includes the first Wi-Fi signal-to-noise ratio threshold, and the second preset condition may include that the Wi-Fi signal-to-noise ratio is less than the first Wi-Fi signal-to-noise ratio threshold. The electronic device determines whether the latest Wi-Fi signal-to-noise ratio is less than the first Wi-Fi signal-to-noise ratio threshold. The latest Wi-Fi signal-to-noise ratio being less than the first Wi-Fi signal-to-noise ratio threshold indicates that a Wi-Fi signal is seriously affected by an interference signal (for example, noise), to be specific, Wi-Fi communication quality is poor. Therefore, the electronic device may determine that the electronic device meets the second preset condition, and enter the independent transmission state to perform Bluetooth communication. If the latest Wi-Fi signal-to-noise ratio is greater than or equal to the first Wi-Fi signal-to-noise ratio threshold, it is determined that the electronic device does not meet the second preset condition, and the electronic device may not enter the independent transmission state to perform Bluetooth communication.

In another example, the current communication indicator includes a latest Bluetooth signal-to-noise ratio, the first communication indicator threshold includes the first Bluetooth signal-to-noise ratio threshold, and the second preset condition may include that the Bluetooth signal-to-noise ratio is less than the first Bluetooth signal-to-noise ratio threshold. The electronic device determines whether the latest Bluetooth signal-to-noise ratio is less than the first Bluetooth signal-to-noise ratio threshold. The latest Bluetooth signal-to-noise ratio being less than the first Bluetooth signal-to-noise ratio threshold indicates that Bluetooth communication quality is poor. The electronic device may determine that the electronic device meets the second preset condition, and enter the independent transmission state to perform Bluetooth communication. If the latest Bluetooth signal-to-noise ratio is greater than or equal to the first Bluetooth signal-to-noise ratio threshold, it is determined that the electronic device does not meet the second preset condition, and the electronic device may not enter the independent transmission state to perform Bluetooth communication.

The foregoing describes a process of how the electronic device determines whether the electronic device meets the second preset condition when the current communication indicator includes one indicator and the second preset condition includes one condition. Certainly, in some embodiments, the current communication indicator may alternatively include a plurality of indicators. Correspondingly, the second preset condition may alternatively include a plurality of conditions. To be specific, the second preset condition may include a condition corresponding to each of the plurality of indicators. In this case, for each indicator of the current communication indicator, the electronic device determines whether the electronic device meets a condition corresponding to the indicator. If the electronic device meets a condition corresponding to each indicator, the electronic device may determine that the electronic device meets the second preset condition. If the electronic device does not meet a condition corresponding to at least one indicator, the electronic device may determine that the electronic device does not meet the second preset condition.

For example, the current communication indicator may include a current Wi-Fi received signal strength and a current Wi-Fi transmit power. The second preset condition may include two conditions: The Wi-Fi received signal strength is greater than the first Wi-Fi received signal strength threshold, and the Wi-Fi transmit power is greater than the first Wi-Fi transmit power threshold. If a latest Wi-Fi received signal strength of the electronic device is greater than the first Wi-Fi received signal strength threshold and a latest Wi-Fi transmit power is greater than the first Wi-Fi transmit power threshold, it can be determined that the electronic device meets the second preset condition.

Alternatively, if the electronic device meets a condition corresponding to at least one indicator, the electronic device may determine that the electronic device meets the second preset condition. If the electronic device meets none of conditions corresponding to all indicators, the electronic device may determine that the electronic device does not meet the second preset condition.

S806: The electronic device enters the independent transmission state.

Specifically, the electronic device determining that the electronic device meets the second preset condition indicates that the electronic device may perform Wi-Fi communication by using a first antenna and perform Bluetooth antenna by using a second antenna. That is, the electronic device may enter the independent transmission state.

S807: The electronic device performs Bluetooth communication and Wi-Fi communication in the time division mode.

Specifically, that the electronic device does not meet the second preset condition indicates that quality of the Bluetooth communication/Wi-Fi communication is good. Therefore, to reduce a waste of resources, it is unnecessary to perform Bluetooth communication and Wi-Fi communication by using different antennas. Therefore, the electronic device may perform Bluetooth communication and Wi-Fi communication in the time division mode.

In some embodiments, because routers of different models have different performance, routers of different models can directly affect Wi-Fi rates of electronic devices accessing the routers. For example, as shown in Table 4 below, in a scenario in which Bluetooth is enabled without scanning (Wi-Fi exclusively occupies an antenna), the electronic device performs Wi-Fi communication and does not perform Bluetooth communication, and the Wi-Fi communication exclusively occupies the antenna. This scenario may be similar to a scenario in which Wi-Fi communication and Bluetooth communication are performed in parallel by using different antennas. Therefore, transmission performance achieved when the electronic device performs Wi-Fi communication and Bluetooth communication in parallel by using different antennas may be similar to transmission performance in this scenario. In addition, a Wi-Fi rate in a case in which the electronic device performs Wi-Fi communication and Bluetooth communication in the time division mode may be learned from Table 4.

**Table 4**

| Frequency band | Scenario | Protocol | Transmission direction | Router A | | Router B | | Router C | | Router D | |
|---|---|---|---|---|---|---|---|---|---|---|---|
| | | | | Wi-Fi rate of the electronic device at a bandwidth of 20 MHz | Wi-Fi rate of the electronic device at a bandwidth of 40 MHz | Wi-Fi rate of the electronic device at a bandwidth of 20 MHz | Wi-Fi rate of the electronic device at a bandwidth of 40 MHz | Wi-Fi rate of the electronic device at a bandwidth of 20 MHz | Wi-Fi rate of the electronic device at a bandwidth of 40 MHz | Wi-Fi rate of the electronic device at a bandwidth of 20 MHz | Wi-Fi rate of the electronic device at a bandwidth of 40 MHz |
| 2.4 GHz | Bluetooth is enabled without scanning (Wi-Fi exclusively occupies an antenna). | TCP | DL | **138** | 362 | 207 | 409 | 79 | 88 | 82.8 | 87.8 |
| | | | UL | **148** | 398 | 195 | 363 | 90 | 91.1 | 86.1 | 90.7 |
| | | UDP | DL | **201** | 377 | 198 | 431 | 95.4 | 90.5 | 85.8 | 90.4 |
| | | | UL | **190** | 424 | 204 | 435 | 91.9 | 95 | 89.9 | 94 |
| | Only BLE scanning of Bluetooth is enabled. | TCP | DL | 163 | 348 | 189 | 422 | 60 | 86.9 | 84.3 | 77.3 |
| | | | UL | 170 | 395 | 181 | 364 | 90.1 | 90.9 | 89.3 | 90.1 |
| | | UDP | DL | 157 | 349 | 193 | 429 | 67.6 | 90.7 | 88.4 | 90.8 |
| | | | | Disconnection | | | | | | | |
| | | | UL | 184 | 419 | 201 | 441 | 92.6 | 94.1 | 92.4 | 94.9 |
| | Bluetooth | TCP | DL | 108 | 206 | 118 | 245 | 34.9 | 40.2 | 41.7 | 40.7 |
| | long-scan | | UL | 102 | 261 | 109 | 248 | Flow interruption Disconnection | 64.7 | Flow interruption Disconnection | 65.9 |
| | | UDP | DL | 113 | 245 | 132 | 250 | 51.7 | 53 | 50.6 | 55.5 |
| | | | UL | 129 | 281 | 127 | 295 | 75.5 | 89.7 | 80.1 | 90.7 |
| | SBC | TCP | DL | 116 | 226 | 125 | 227 | 28.4 | 31.7 | 29.2 | 31.6 |
| | | | UL | 120 | 277 | 117 | 246 | Flow interruption | 59.7 | Flow interruption | 60.4 |
| | | | | | | | | Disconnection | | Disconnection | |
| | | UDP | DL | 105 Disconnection | 249 | 127 | 245 | 42 | 48.9 | 43.4 | 47.6 |
| | | | UL | 145 | 284 | 135 | 195 | 86 | 93.4 | 83.6 | 93.4 |
| | AAC | TCP | DL | 130 | **248** | 139 | 268 | 28.2 | 30.6 | 28.9 | 32.1 |
| | | | UL | 134 | **283** | 136 | 280 | Flow interruption | 58.6 | Flow interruption | 60.4 |
| | | | | | | | | Disconnection | | Disconnection | |
| | | UDP | DL | 143 | **242** | 148 | 247 | 45.5 | 48.4 | 15.5 | 47.1 |
| | | | UL | 159 | **294** | 162 | 315 | 88.4 | 95.2 | 88.4 | 91.5 |
| | LDAC | TCP | DL | 6.53 | 22.7 | 30.2 | 63.3 | 5.97 | 6.27 | 1.88 | 6.07 |
| | | | UL | 11 | 50.9 | 23.8 | 68.8 | 9.58 | 16.9 | 14.3 | Flow interruption |
| | | | | | | | | | | | Disconnection |
| | | UDP | DL | 0.243 | 29.4 | 46.8 | 73.5 | 7.45 | 8.95 | 5.82 | 11 |
| | | | UL | 17.2 | 33.8 | 27.5 | 65.1 | 13.5 | 37.3 | 13 | 24.1 |

It should be understood that the TCP shown in Table 4 stands for the transmission control protocol (transmission control protocol). The UDP stands for the user datagram protocol (user datagram protocol). The UL stands for the uplink, and the DL stands for the downlink.

The data shown in Table 4 is obtained through testing when a distance between the electronic device and the router is short (for example, 20 cm). It can be learned from Table 4 that, in different scenarios, a model and an operating bandwidth of a router both affect a Wi-Fi rate. Specifically, in a same scenario with a same router, a Wi-Fi rate corresponding to an operating bandwidth of 40 MHz is higher than a Wi-Fi rate corresponding to an operating bandwidth of 20 MHz. This indicates that because the operating bandwidth of 40 MHz is suitable for short-range transmission, the Wi-Fi rate corresponding to the operating bandwidth of 40 MHz is high. In a same scenario with a same operating bandwidth, a Wi-Fi rate corresponding to the router A and a Wi-Fi rate corresponding to the router B each are higher than a Wi-Fi rate corresponding to the router C, and the Wi-Fi rate corresponding to the router A and the Wi-Fi rate corresponding to the router B each are higher than a Wi-Fi rate corresponding to the router D. Because different retransmission policies are used for routers of different models, Wi-Fi rates corresponding to different routers are also different. When a same router and a same operating bandwidth are used, a Wi-Fi rate corresponding to the scenario in which Bluetooth is enabled without scanning is higher than a Wi-Fi rate corresponding to the AAC scenario, and the Wi-Fi rate corresponding to the AAC scenario and the Wi-Fi rate corresponding to the scenario in which Bluetooth is enabled without scanning each are higher than a Wi-Fi rate corresponding to the LDAC scenario. An LDAC coding rate is higher than an AAC coding rate, and the scenario in which Bluetooth is enabled without scanning is a scenario without a Bluetooth coding scheme. Therefore, a higher coding rate leads to a lower Wi-Fi rate. Herein, in the AAC scenario or the LDAC scenario, the electronic device encodes data based on an AAC coding format or an LDAC coding format when performing Bluetooth communication.

In some embodiments, based on the test process corresponding to Table 2, a related person performs test processes on the router B, the router C, and the router D to obtain data shown in Table 5. Table 5 includes Wi-Fi rates of the electronic device at different Wi-Fi received signal strengths with different routers used after Bluetooth is disabled, Wi-Fi rates in the time division mode and Wi-Fi rates in the parallel mode in different Bluetooth coding formats, and corresponding benefits.

**Table 5**

| | Router A | Test scenario: Connect to a Bluetooth headset to play music, at a location of 20 cm and with an operating bandwidth of 20 M | | | | | | | | |
|---|---|---|---|---|---|---|---|---|---|---|
| | Coding format | LDAC 990 | | | LDAC 330 | | | AAC | | |
| Wi-Fi received signal strength | Wi-Fi rate after Bluetooth is disabled | Wi-Fi rate in the time division mode | Wi-Fi rate in the parallel mode | Wi-Fi benefit | Wi-Fi rate in the time division mode | Wi-Fi rate in the parallel mode | Wi-Fi benefit | Wi-Fi rate in the time division mode | Wi-Fi rate in the parallel mode | Benefit |
| > -45 | 220.67 | 21 | 170.2 | 710% | 138 | 188 | 36% | 143.5 | 190.2 | 33% |
| -50 to -55 | 125.86 | 20.8 | 123.87 | 496% | 133.8 | 145.2 | 9% | 145.2 | 175.6 | 21% |
| -60 to -62 | 176.13 | 16.52 | 57.73 | 249% | 123.57 | 119.23 | -4% | 108.85 | 110.49 | 2% |
| -65 to -67 | 133.54 | 13.45 | 41.34 | 207% | 111.23 | 96 | -14% | 81.44 | 82.78 | 2% |
| -70 to -72 | 96.14 | 8.5 | | | 70.2 | | | 58.47 | 59.77 | 2% |

| | Router B | Test scenario: Connect to a Bluetooth headset to play music, at a location of 20 cm and with an operating bandwidth of 20 M | | | | | | | | |
|---|---|---|---|---|---|---|---|---|---|---|
| | Coding format | LDAC 990 | | | LDAC 330 | | | AAC | | |
| Wi-Fi received signal strength | Wi-Fi rate after Bluetooth is disabled | Wi-Fi rate in the time division mode | Wi-Fi rate in the parallel mode | Wi-Fi benefit | Wi-Fi rate in the time division mode | Wi-Fi rate in the parallel mode | Wi-Fi benefit | Wi-Fi rate in the time division mode | Wi-Fi rate in the parallel mode | Wi-Fi benefit |
| -40 to -45 | 25.2 | 1.83 | 22.4 | 1124% | 17.6 | 25.2 | 43% | 19.3 | 22 | 14% |
| -50 to -55 | 25.1 | 2.74 | 21.5 | 685% | 17.4 | 24.8 | 43% | 19.2 | 24.4 | 27% |
| -60 to -62 | 22.4 | 129k | 20.9 | | 17.2 | 17.2 | 0% | 18.8 | 22 | 17% |
| -65 to -67 | 23.8 | | 19.8 | | 15.9 | 16.3 | 3% | 16.9 | 20.8 | 23% |
| -70 to -72 | 24.4 | | 5.91 | | 16.4 | 10.5 | -36% | 17.7 | 12.7 | -28% |

| | Router C | Test scenario: Connect to a Bluetooth headset to play music, at a location of 20 cm and with an operating bandwidth of 20 M | | | | | | | | |
|---|---|---|---|---|---|---|---|---|---|---|
| | Coding format | LDAC 990 | | | LDAC 330 | | | AAC | | |
| Wi-Fi received signal strength | Wi-Fi rate after Bluetooth is disabled | Wi-Fi rate in the time division mode | Wi-Fi rate in the parallel mode | Wi-Fi benefit | Wi-Fi rate in the time division mode | Wi-Fi rate in the parallel mode | Wi-Fi benefit | Wi-Fi rate in the time division mode | Wi-Fi rate in the parallel mode | Wi-Fi benefit |
| > -45 | 65.4 | 5.58 | 42.4 | 660% | 43.3 | 51.9 | 20% | 48.3 | 62.2 | 29% |
| -50 to -55 | 65 | 6.91 | 36.3 | 425% | 43.1 | 44.5 | 3% | 48 | 61.5 | 28% |
| -60 to -62 | 64.8 | 6.85 | 26.9 | 293% | 42.8 | 35 | | 47.2 | 48.1 | 2% |
| -65 to -67 | 52.7 | 6.7 | 25.3 | 278% | 42.4 | 33.9 | | 37.7 | 45.7 | 21% |
| -70 to -72 | 52.6 | 2.01 | 11.3 | 462% | 24.4 | 6.53 | | 35.4 | 36.5 | 3% |

| | Router D | Test scenario: Connect to a Bluetooth headset to play music, at a location of 20 cm and with an operating bandwidth of 40 M | | | | | | | | |
|---|---|---|---|---|---|---|---|---|---|---|
| | Coding format | LDAC 990 | | | LDAC 330 | | | AAC | | |
| Wi-Fi received signal strength | Wi-Fi rate after Bluetooth is disabled | Wi-Fi rate in the time division mode | Wi-Fi rate Bluetooth in the parallel mode | Wi-Fi benefit | Wi-Fi rate in the time division mode | Wi-Fi rate in the parallel mode | Wi-Fi benefit | Wi-Fi rate in the time division mode | Wi-Fi rate in the parallel mode | Wi-Fi benefit |
| > -45 | 112 | 11.8 | 80.3 | 581% | 79.2 | 96.8 | 22% | 84.7 | 1022 | 20% |
| -50 to -55 | 112 | 9.9 | 25.2 | 155% | 73.3 | 86.2 | 18% | 83.9 | 81.2 | -3% |
| -60 to -62 | 112 | 10.5 | 11.1 | 6% | 72.9 | 59.5 | -18% | 80.3 | 55 | -32% |
| -65 to -67 | 91 | 7.4 | 4.85 | -34% | 57.2 | 46.7 | -18% | 64.5 | 53.2 | -18% |
| -70 to -72 | 90.2 | 7.38 | 1.63 | -78% | 57.6 | 25.2 | -56% | 61.1 | 49.2 | -19% |

It should be noted that, it can be learned from Table 5 that Wi-Fi rates of different routers are also different. From an overall perspective, a Wi-Fi rate of the router A is high, and a Wi-Fi rate of the router B is low. Therefore, to sum up, routers of different models affect a Wi-Fi rate.

In a possible implementation, the first communication indicator threshold may alternatively be preset based on a router and/or an operating bandwidth. For example, an example in which the first communication indicator threshold is the first Wi-Fi received signal strength threshold is used for description. Better transmission performance of the router indicates a higher first Wi-Fi received signal strength threshold. Poorer transmission performance of the router indicates a lower first Wi-Fi received signal strength threshold. A higher operating bandwidth indicates a higher first Wi-Fi received signal strength threshold. A lower operating bandwidth indicates a lower first Wi-Fi received signal strength threshold specified. In this way, accuracy of determining the first communication indicator threshold can be improved.

As shown in Table 5, for example, for the router A, a Bluetooth coding format is the AAC, an operating mode is the time division mode, a Wi-Fi rate (that is, 248, 283, 242, and 294) in a case in which an operating bandwidth of Wi-Fi communication is 40 MHz is higher than a Wi-Fi rate (that is, 138, 148, 201, and 190) in the parallel mode in a case in which an operating bandwidth of Wi-Fi communication is 20 MHz. In this case, Wi-Fi transmission performance of the electronic device is good when the electronic device is in the time division mode and the operating bandwidth of the Wi-Fi communication is 40 MHz.

It can be understood that the electronic device may be connected to routers of different models to perform Wi-Fi communication. Because routers of different models have different performance, the routers may directly affect an operating mode in which the electronic device performs Wi-Fi communication and Bluetooth communication.

For example, for the router A, when a Bluetooth service corresponds to the LDAC, rates of Wi-Fi communication and Bluetooth communication in the time division mode are low. In other words, a Wi-Fi rate in the parallel mode is high.

For another example, for the router C, regardless of a Bluetooth coding format to which a Bluetooth service corresponds, rates of performing Wi-Fi communication and Bluetooth communication through time division are low. In other words, a Wi-Fi rate in the parallel mode is high.

In this application, routers of different models affect operating modes of the Wi-Fi module and the Bluetooth module. In some scenarios, operating modes of the electronic device are different based on different routers, and correspondingly, routers of different models may correspond to different first preset indicator thresholds. For example, when the router A is used, the electronic device has good transmission performance when performing Wi-Fi communication and Bluetooth communication through time division. However, when the router B is used, the electronic device has good transmission performance when performing Wi-Fi communication and Bluetooth communication in parallel. In other scenarios, when a same router is used, operating modes in which the electronic device achieves good transmission performance for different Bluetooth services may be different. For example, for a same router, when the router A is used, the electronic device has good transmission performance when performing Wi-Fi communication and Bluetooth communication through time division. However, when the router B is used, the electronic device has good transmission performance when performing Wi-Fi communication and Bluetooth communication in parallel.

For example, the operating module may include the time division mode and the parallel mode, and the parallel mode may include a first parallel mode and a second parallel mode.

Time division mode: a time division mode of Bluetooth communication and Wi-Fi communication, in which an operating bandwidth of the Wi-Fi communication is not limited. For example, the operating bandwidth of the Wi-Fi communication may be 40 MHz or 20 MHz. In this operating mode, the electronic device performs Wi-Fi communication and Bluetooth communication through time division by reusing an antenna, or the electronic device may perform Wi-Fi communication and Bluetooth communication through time division by using different antennas.

First parallel mode: a parallel mode of Wi-Fi communication and Bluetooth communication, in which an operating bandwidth of the Wi-Fi communication is a first operating bandwidth. In this operating mode, the electronic device performs Wi-Fi communication and Bluetooth communication in parallel by using different antennas. For example, the first operating bandwidth is 20 MHz.

Second parallel mode: a parallel mode of Wi-Fi communication and Bluetooth communication, in which an operating bandwidth of the Wi-Fi communication is a second operating bandwidth. In this operating mode, the electronic device performs Wi-Fi communication and Bluetooth communication in parallel by using different antennas. For example, the second operating bandwidth is 40 MHz.

In the parallel mode, generally, an operating bandwidth of the Bluetooth communication includes a bandwidth in an operating frequency band other than the operating bandwidth (20 MHz or 40 MHz) of the Wi-Fi communication. However, in a special case, the operating bandwidth of the Bluetooth communication also includes a small part of the operating bandwidth of the Wi-Fi communication.

It should be noted that the operating bandwidth of the Wi-Fi communication in the foregoing three operating modes indicates a maximum operating bandwidth that can be used for the Wi-Fi communication. An operating bandwidth actually used by the electronic device to perform Wi-Fi communication is not necessarily the maximum operating bandwidth that can be used for the Wi-Fi communication, and a specific case is related to a configuration of a router. If a bandwidth supported by the router includes the maximum operating bandwidth that can be used for the Wi-Fi communication, the operating bandwidth actually used by the electronic device to perform Wi-Fi communication may be the maximum operating bandwidth. If a bandwidth supported by the router is less than the maximum operating bandwidth, the operating bandwidth actually used by the electronic device to perform Wi-Fi communication is less than the maximum operating bandwidth. For example, if the electronic device determines that the operating bandwidth of the Wi-Fi communication is 40 MHz but the router supports only an operating bandwidth of 20 MHz, the operating bandwidth actually used by the electronic device to perform Wi-Fi communication is 20 MHz. For another example, if the electronic device determines that the maximum operating bandwidth of the Wi-Fi communication is 40 MHz and the router also supports an operating bandwidth of 40 MHz, the operating bandwidth actually used by the electronic device to perform Wi-Fi communication may be 40 MHz.

It should be understood that although this embodiment of this application is provided by using an operating frequency band of 2.4 GHz and an operating bandwidth of 40 MHz or 20 MHz, this embodiment of this application should not be limited thereto. For example, operating frequency bands of the Wi-Fi communication and the Bluetooth communication are not necessarily limited to 2.4 GHz, and whether the independent transmission state needs to be entered can be determined provided that the operating frequency bands of the Wi-Fi communication and the Bluetooth communication overlap. For another example, the operating bandwidth of the Wi-Fi communication is not necessarily limited to 40 MHz or 20 MHz, and may alternatively be another value, for example, 30 MHz or 50 MHz.

In the communication method provided in this embodiment of this application, when operating frequency bands of the Wi-Fi module and the Bluetooth module in the electronic device overlap (for example, the operating frequency bands of the Wi-Fi module and the Bluetooth module are both 2.4 GHz), the electronic device may obtain the first communication indicator threshold after determining that the electronic device meets the first preset condition, and then compare the current communication indicator obtained in real time with the first communication indicator threshold, to determine whether the electronic device can perform Wi-Fi communication and Bluetooth communication by using different antennas. In this way, interference between the Wi-Fi communication and the Bluetooth communication can be reduced, and good transmission performance can be maintained. This not only improves system flexibility, but also improves system stability, and can also reduce a waste of resources.

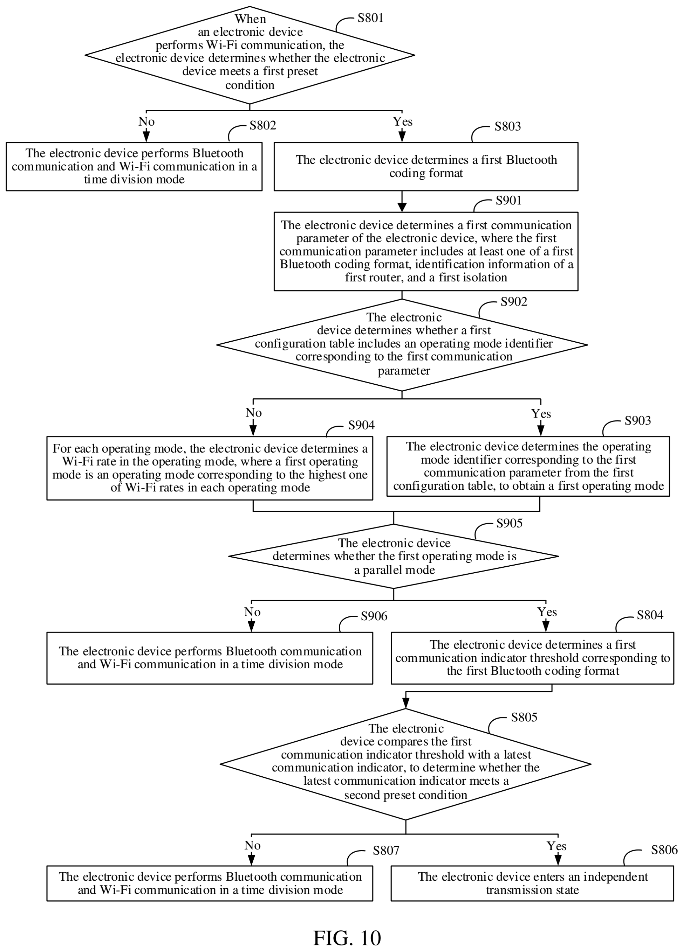

In some embodiments, after determining that the electronic device meets the first preset condition, the electronic device may determine, by using a related configuration table, whether hardware resources of the electronic device can meet a requirement of the parallel mode. If the hardware resources of the electronic device can meet the requirement of the parallel mode, the electronic device may determine that whether the electronic device needs to enter the independent transmission state can be determined by using the first communication indicator threshold. A process of directly determining, by the electronic device, a first operating mode by using a configuration table is described below with reference to S901 to S905 in FIG. 10.

S901: The electronic device determines a first communication parameter of the electronic device, where the first communication parameter includes at least one of a first Bluetooth coding format, identification information of a first router, and a first isolation.

The first communication parameter indicates a latest communication parameter of the electronic device. The first router (or referred to as a current router or a latest router) indicates a router currently used by the electronic device to perform Wi-Fi communication. To be specific, the electronic device accesses a Wi-Fi signal provided by the first router. The first isolation (or referred to as a current isolation) indicates an isolation between antennas. The isolation between antennas indicates a ratio of a power of a signal transmitted by an antenna to a strength power of a signal received by another antenna. In other words, the isolation between antennas indicates an output attenuation degree of a transmitted signal of an antenna on another antenna. A larger ratio indicates a smaller and better isolation. In this implementation, the isolation between antennas is an isolation between the first antenna and the second antenna.

For example, the identification information of the first router may be a model, a name, or the like of the first router. The first Bluetooth coding format is alternatively referred to as a current Bluetooth coding format or a latest Bluetooth coding format.

S902: The electronic device determines whether a first configuration table includes an operating mode identifier corresponding to the first communication parameter.

For example, if the first configuration table includes the operating mode identifier corresponding to the first communication parameter, the electronic device may perform S903; or if the first configuration table does not include the operating mode identifier corresponding to the first communication parameter, the electronic device may perform S904.

S903: The electronic device determines the operating mode identifier corresponding to the first communication parameter from the first configuration table, to obtain the first operating mode.

The first operating mode is an operating mode corresponding to the operating mode identifier corresponding to the first communication parameter. The first configuration table (or described as a whitelist) includes a communication parameter and an operating mode identifier corresponding to the communication parameter. The communication parameter may include at least one of the following information: a Bluetooth coding format, identification information of a router, and an isolation range. The operating mode may include a parallel mode and a time division mode. In some embodiments, the parallel mode may include a first parallel mode and a second parallel mode. For example, the communication parameter may include a Bluetooth coding format and identification information of a router. The first configuration table includes at least one Bluetooth coding format, identification information of at least one router, and an operating mode identifier corresponding to a Bluetooth coding format and an identifier of a router. For another example, the first communication parameter may include a Bluetooth coding format, identification information of a router, and an isolation range. The first configuration table includes at least one Bluetooth coding format, identification information of at least one router, at least one isolation, and an operating mode identifier corresponding to a Bluetooth coding format, identification information of a router, and an isolation range.

A process of determining the first operating mode by the electronic device is described below by using an example in which the operating mode includes the time division mode and the parallel mode, the parallel mode includes the first parallel mode and the second parallel mode, and the communication parameter may include a Bluetooth coding format, a router identifier, and an isolation range.

The first communication parameter obtained by the electronic device includes the first Bluetooth coding format (that is, AAC), the identification information (that is, A) of the first router, and an isolation a, where a is less than a2. With reference to a first configuration table shown in Table 6, the electronic device may determine that the first operating mode is the time division mode. In a possible implementation, an operating bandwidth corresponding to the time division mode may be further determined based on the first configuration table, for example, 40 MHz, as shown in Table 6.

**Table 6**

| Sequence number | Bluetooth coding format | Router identifier | Isolation | Operating mode identifier |
|---|---|---|---|---|
| 1 | AAC | A | a<a₂ | Time division mode+40 MHz |
| 2 | SBC | A | a<a₂ | Time division mode+40 MHz |
| 3 | LDAC 990 | A | a>a₁ | Parallel mode+40 MHz (namely, the second parallel mode) |
| 4 | LDAC 330 | A | a₂<a<a₁ | Parallel mode+20 MHz (namely, the first parallel mode) |
| 5 | AAC, SBC, and LDAC | C | a>a₁ | Parallel+40 MHz (namely, the second parallel mode) |
| 6 | AAC | C | a₂<a<a₁ | Parallel+20 MHz (namely, the first parallel mode) |

The following describes in detail relationships, determined in Table 6, between the isolation-between-antennas and al (namely, a first isolation threshold) and between the isolation-between-antennas and a2 (namely, a second isolation threshold).

It should be understood that the first isolation threshold is related to an operating bandwidth of 40 MHz of Wi-Fi communication. The isolation between antennas is fixed and may be directly obtained.

In an example, the electronic device determining that the isolation between the first antenna and the second antenna is greater than the first isolation threshold indicates that the isolation between the first antenna and the second antenna is sufficiently large, and a requirement of the second parallel mode can be met, to be specific, a requirement that the electronic device performs Wi-Fi communication and Bluetooth communication in parallel by using different antennas and an operating bandwidth of the Wi-Fi communication is 40 MHz is met. Interference between transmission in the two types of communication is reduced. In other words, a degree of interference is within an acceptable range. Therefore, the electronic device may continue to determine, by using a first communication indicator threshold, whether Bluetooth communication and Wi-Fi communication need to be performed in the parallel mode.

In another example, the electronic device determining that the isolation between the first antenna and the second antenna is less than or equal to the first isolation threshold indicates that the isolation between the first antenna and the second antenna is still not sufficiently large, and cannot meet a requirement of the second parallel mode. In short, the electronic device cannot support the parallel mode. Therefore, the electronic device may determine that the operating mode is the time division mode, and no longer needs to determine, by using the first communication indicator threshold, whether the electronic device is to use the parallel mode.

In another example, the electronic device may determine whether the isolation between the first antenna and the second antenna is greater than a second isolation threshold. The second isolation threshold is less than the first isolation threshold, and the second isolation threshold is related to an operating bandwidth of 20 MHz of Wi-Fi communication.

The electronic device determining that the isolation between the first antenna and the second antenna is greater than the second isolation threshold indicates that the isolation between the first antenna and the second antenna is large, and a requirement of the first parallel mode can be met, to be specific, a requirement that Wi-Fi communication and Bluetooth communication are performed in parallel by using different antennas and an operating bandwidth of the Wi-Fi communication is 20 MHz is met. In this way, interference between transmission in the two types of communication is not large. In other words, the interference is within an acceptable range.

It can be understood that, when the isolation between antennas is small, large interference occurs during transmission, and the operating bandwidth of the Wi-Fi communication is reduced to effectively reduce the interference.

In another example, the electronic device determining that the isolation between the first antenna and the second antenna is less than or equal to the second isolation threshold indicates that the isolation between the first antenna and the second antenna is quite small, and a requirement that Wi-Fi communication and Bluetooth communication are performed in parallel by using different antennas and an operating bandwidth of the Wi-Fi communication is 20 MHz cannot be met.

In some embodiments, the second antenna may be determined in the following several implementations.

In some implementations, the second antenna is a cellular antenna. Cellular communication and the Bluetooth communication share an antenna, and the electronic device includes a plurality of cellular antennas. Therefore, the electronic device may determine the second antenna from the plurality of cellular antennas based on a degree of idleness of the cellular communication and an isolation between each of the plurality of cellular antennas and the first antenna. For an implementation process of determining the second antenna from the plurality of cellular antennas, refer to the following two possible examples.

In an example, when the cellular communication is not busy, the electronic device may determine, as the second antenna, an antenna, among the plurality of cellular antennas, that has a largest isolation from the first antenna.

In another example, when the cellular communication is not busy, if N antennas among the plurality of cellular antennas all meet an isolation requirement, to be specific, the N antennas all meet a requirement that an isolation from the second antenna is greater than a preset value, the electronic device may alternatively use the N antennas, among the plurality of cellular antennas, that meet the isolation requirement as the second antenna, where N is greater than 1. For example, when N=2, if isolations between two cellular antennas of the electronic device and the first antenna meet the isolation requirement, the two cellular antennas may both serve as the second antenna.

In some other embodiments, the second antenna is an antenna used only for Bluetooth (referred to as a Bluetooth antenna for short). If the electronic device includes only one Bluetooth antenna, the second antenna is the antenna. If the electronic device includes a plurality of Bluetooth antennas, the electronic device may determine the second antenna from the plurality of Bluetooth antennas based on an isolation between each of the plurality of Bluetooth antennas and the first antenna. For an implementation process of determining the second antenna from the plurality of Bluetooth antennas, refer to the following two possible examples.

In an example, the electronic device may determine, as the second antenna, an antenna, among the plurality of Bluetooth antennas, that has a largest isolation from the first antenna. In another example, the electronic device may use N antennas, among the plurality of Bluetooth antennas, that meet an isolation requirement as the second antenna.

It should be understood that the foregoing example manners of determining the second antenna are merely examples for description, and any manner that can be used to determine the second antenna is feasible. This is not limited in this embodiment of this application.

It should be noted that the first configuration table may be preconfigured on the electronic device. For example, when the electronic device is delivered, the first configuration table is preconfigured on the device. Alternatively, the first configuration table may be obtained by the electronic device from a server. For example, the electronic device may periodically send a request to the server to obtain the first configuration table. Alternatively, the server may periodically and actively send the first configuration table to the electronic device. Alternatively, the first configuration table is generated by the electronic device through autonomous learning in a process of determining, by using an indicator threshold, whether to enter an independent transmission state. The first configuration table may be continuously updated.

It should be noted that a case in which the first configuration table does not include the first communication parameter or does not include an operating mode corresponding to the electronic device indicates that the electronic device cannot directly determine the first operating mode by using the first configuration table, and therefore cannot accurately determine whether the electronic device needs to enter the independent transmission state. In this way, an unnecessary waste of resources can be reduced.

S904: For each operating mode, the electronic device determines a Wi-Fi rate in the operating mode. The first operating mode is an operating mode corresponding to the highest one of Wi-Fi rates in each operating mode.

Specifically, when the first configuration table does not include the first Bluetooth coding format and/or the identification information of the first router that are/is determined by the electronic device, the electronic device may capture, for different operating modes, a Wi-Fi rate in a corresponding operating mode, and use an operating mode with a highest Wi-Fi rate as the first operating mode. For example, the electronic device is currently in the time division mode, and the electronic device may directly capture a Wi-Fi rate in the time division mode. Then the electronic device may switch to the parallel mode to capture a Wi-Fi rate in the parallel mode.

Certainly, Wi-Fi rates in the foregoing different operating modes may alternatively be captured and stored by the electronic device when the electronic device is in a corresponding operating mode. Then, when the Wi-Fi rates of the electronic device in the different operating modes need to be used, the Wi-Fi rates may be directly obtained.

For example, if the electronic device determines that the Wi-Fi rate of the electronic device in the time division mode is 5 Mpbs and the Wi-Fi rate in the parallel mode is 80 Mbps, the first operating mode is the parallel mode.

In a possible implementation, when the first configuration table does not include the operating mode identifier corresponding to the first communication parameter, a process of determining the first operating mode may include: The electronic device determines a first Wi-Fi rate of the electronic device in the time division mode. The first Wi-Fi rate being greater than a preset rate indicates that a transmission rate in a case in which Wi-Fi and Bluetooth share an antenna is quite high. In this case, the first operating mode is the time division mode, and the electronic device no longer needs to determine, by using the first communication indicator threshold, whether to enter the independent transmission state.

The electronic device determining that the first Wi-Fi rate is less than a preset rate indicates that Wi-Fi communication quality is poor. Therefore, the electronic device needs to determine a second Wi-Fi rate when the electronic device enters the independent transmission state. The second Wi-Fi rate being higher than the first Wi-Fi rate indicates that a Wi-Fi rate in the parallel mode is high, and the first operating mode may be the parallel mode.

In some embodiments, as described above, when determining that the electronic device meets the first preset condition, the electronic device determines the first operating mode by using the first configuration table. Certainly, the electronic device may alternatively first determine the first operating mode by using the first configuration table (for example, perform S901 to S904). After obtaining the first operating mode, if the first operating mode is the time division mode, the electronic device does not need to continue to determine whether the electronic device meets the first preset condition. The first operating mode being the parallel mode indicates that hardware resources of the electronic device can meet a requirement of the parallel mode. Therefore, the electronic device may continue to determine whether the electronic device meets the first preset condition, to be specific, determine whether the electronic device has a requirement of entering the independent transmission state.

In a possible implementation, to improve accuracy of determining the first operating mode, after determining that the first Wi-Fi rate (to be specific, the Wi-Fi rate in the time division mode) is less than the preset rate, the electronic device needs to determine the Wi-Fi rate of the electronic device in the parallel mode, for example, a third Wi-Fi rate corresponding to the first parallel mode and a fourth Wi-Fi rate corresponding to the second parallel mode. Then the electronic device may use, as the first operating mode, a parallel mode corresponding to a largest one of the third Wi-Fi rate corresponding to the first parallel mode and the fourth Wi-Fi rate corresponding to the second parallel mode. For example, the first Wi-Fi rate of the electronic device in the time division mode is 5 Mpbs. Because the first Wi-Fi rate is low, the electronic device may need to enter the independent transmission state. However, after entering the independent transmission state to perform Bluetooth communication, the electronic device determines that the third Wi-Fi rate of the electronic device in the first parallel mode is 80 Mbps, and determines that the fourth Wi-Fi rate of the electronic device in the second parallel mode is 100 Mbps. The fourth Wi-Fi rate is higher than the third Wi-Fi rate. Therefore, the first operating mode may be the second parallel mode.

In another possible implementation, when the first Wi-Fi rate (to be specific, the Wi-Fi rate in the time division mode) is less than the preset rate, the electronic device separately compares the third Wi-Fi rate and the fourth Wi-Fi rate with a preset Wi-Fi rate (or referred to as a preset rate), and uses an operating mode corresponding to a Wi-Fi rate greater than the preset Wi-Fi rate as the first operating mode.

For example, if the third Wi-Fi rate and the fourth Wi-Fi rate are both greater than the preset Wi-Fi rate, an operating mode corresponding to the largest one of the third Wi-Fi rate and the fourth Wi-Fi rate may be used as the first operating mode; or if the third Wi-Fi rate and the fourth Wi-Fi rate are both less than or equal to the preset Wi-Fi rate, an operating mode corresponding to the largest one of the first Wi-Fi rate, the third Wi-Fi rate, and the fourth Wi-Fi rate needs to be used as the first operating mode.

S905: The electronic device determines whether the first operating mode is the parallel mode.

For example, the first operating mode being the parallel mode indicates that the electronic device can support the parallel mode, whether the electronic device needs to enter the parallel mode may be further determined, and the electronic device may perform step S804. The first operating mode being not the parallel mode indicates that the electronic device may not meet hardware resources needed in the parallel mode. If the electronic device enters the parallel mode, communication quality is slightly improved, or communication quality is even worse. Therefore, the electronic device does not need to enter the parallel mode, and the electronic device may perform step S906.

In this application, the electronic device determining that the first operating mode is the parallel mode indicates that hardware resources of the electronic device meet resources needed in the independent transmission state. The electronic device may perform Bluetooth communication and Wi-Fi communication in the parallel mode. The electronic device may determine, from the second configuration table, a first communication indicator threshold corresponding to the first Bluetooth coding format, to determine, by using the first communication indicator threshold, whether the electronic device needs to enter the independent transmission state. The electronic device determining that the first operating mode is the time division mode indicates that hardware resources of the electronic device cannot meet resources needed in the independent transmission state. In this case, the electronic device may directly determine to perform Bluetooth communication and Wi-Fi communication in the time division mode.

S906: The electronic device performs Bluetooth communication and Wi-Fi communication in the time division mode.

S804: The electronic device determines the first communication indicator threshold corresponding to the first Bluetooth coding format.

For example, after determining that the first operating mode is the parallel mode, the electronic device may determine, from a third configuration table, a first communication indicator threshold corresponding to a latest (namely, current) communication parameter (for example, the first Bluetooth coding format). The third configuration table includes a communication parameter, an operating mode identifier, and a first communication indicator threshold corresponding to the communication parameter and the operating mode identifier.

For example, the third configuration table may include at least one Bluetooth coding format, identification information of at least one router, at least one isolation range, at least one operating mode identifier (or described as a first operating mode), and a first communication indicator threshold corresponding to an operating mode identifier, a Bluetooth coding format, identification information of a router, and an isolation range. For example, the Bluetooth coding format is LDAC 990 kbps, the identification information of the router is A, and an isolation between antennas is a, where a is greater than the first isolation threshold al. The electronic device may determine, based on Table 7, that the operating mode identifier is the parallel mode+40 MHz (namely, the second parallel mode), and the first communication indicator threshold may include a Bluetooth transmit power threshold BT TX 1, a Bluetooth received signal strength threshold BT RSSI 1, a Bluetooth symbol error rate threshold BT BTBLER 1, a Wi-Fi transmit power threshold Wi-Fi TX 1, a Wi-Fi received signal strength threshold Wi-Fi RSSI 1, a Wi-Fi symbol error rate threshold Wi-Fi BTBLER 1, a Wi-Fi signal-to-noise ratio threshold Wi-Fi SNR 1, and the like.

It can be understood that, because coding rates corresponding to some Bluetooth coding formats (for example, a Bluetooth coding format other than the LDAC) are a value or a small rate range, the electronic device does not need to distinguish between coding rates during obtaining.

**Table 7**

| Sequence number | Bluetooth coding format | Router identifier | Isolation range | Operating mode identifier | First communication indicator threshold |
|---|---|---|---|---|---|
| 1 | AAC | A | a<a₂ | Time division mode+40 MHz | None |
| 2 | SBC | A | a<a₂ | Time division mode+40 MHz | None |
| 3 | LDAC 990 | A | a>a₁ | Parallel mode+40 MHz (namely, the second parallel mode) | At least one of a Bluetooth transmit power threshold BT TX 1, a Bluetooth received signal strength threshold BT RSSI 1, a Bluetooth symbol error rate threshold BT BTBLER 1, a Wi-Fi transmit power Wi-Fi TX 1, a Wi-Fi received signal strength Wi-Fi RSSI 1, a Wi-Fi symbol error rate Wi-Fi BTBLER 1, and a Wi-Fi signal-to-noise ratio Wi-Fi SNR 1 |
| 4 | LDAC 330 | A | a₂<a<a₁ | Parallel mode+20 MHz (namely, the first parallel mode) | At least one of a Bluetooth transmit power threshold BT TX 3, a Bluetooth received signal strength threshold BT RSSI 3, a Bluetooth symbol error rate threshold BT BTBLER 3, a Wi-Fi transmit power Wi-Fi TX 3, a Wi-Fi received signal strength Wi-Fi RSSI 3, a Wi-Fi symbol error rate Wi-Fi BTBLER 3, and a Wi-Fi signal-to-noise ratio Wi-Fi SNR 3 |
| 5 | AAC, SBC, and LDAC | C | a>a₁ | Parallel mode+40 MHz (namely, the second parallel mode) | At least one of a Bluetooth transmit power threshold BT TX 5, a Bluetooth received signal strength threshold BT RSSI 5, a Bluetooth symbol error rate threshold BT BTBLER 5, a Wi-Fi transmit power Wi-Fi TX 5, a Wi-Fi received signal strength Wi-Fi RSSI 5, a Wi-Fi symbol error rate Wi-Fi BTBLER 5, and a Wi-Fi signal-to-noise ratio Wi-Fi SNR 5 |
| 6 | AAC | C | a₂<a<a₁ | Parallel mode+20 MHz (namely, the first parallel mode) | At least one of a Bluetooth transmit power threshold BT TX 7, a Bluetooth received signal strength threshold BT RSSI 7, a Bluetooth symbol error rate threshold BT BTBLER 7, a Wi-Fi transmit power Wi-Fi TX 7, a Wi-Fi received signal strength Wi-Fi RSSI 7, a Wi-Fi symbol error rate Wi-Fi BTBLER 7, and a Wi-Fi signal-to-noise ratio Wi-Fi SNR 7 |

It should be understood that the third configuration table and the second configuration table may be a same table or different tables.

Specifically, after determining that the first operating mode is the time division mode, the electronic device may determine to perform Bluetooth communication and Wi-Fi communication in the time division mode, and does not need to enter the independent transmission state to perform Bluetooth communication. In this way, an unnecessary waste of resources can be reduced.

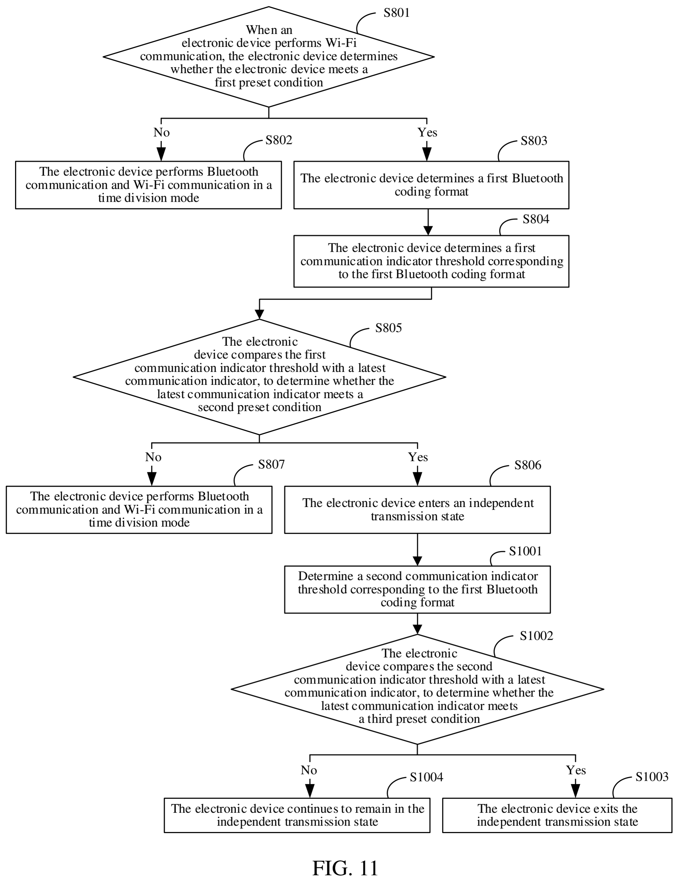

In some embodiments, after entering the independent transmission state, to be specific, during Bluetooth communication and Wi-Fi communication in the parallel mode, the electronic device may further periodically obtain a current communication indicator (namely, a latest communication indicator) in real time, to determine, by using the current communication indicator, whether the electronic device is to exit the independent transmission state, to enable the Wi-Fi communication to achieve a benefit of a high bandwidth. For example, a process of exiting the independent transmission state may include steps shown in FIG. 11.

S1001: When the electronic device enters the independent transmission state to perform Bluetooth communication, determine a second communication indicator threshold corresponding to the first Bluetooth coding format.

Specifically, after it is determined that the electronic device enters the independent transmission state to perform Bluetooth communication, a second communication indicator threshold corresponding to the latest communication indicator (for example, the first Bluetooth coding format, namely, the latest Bluetooth coding format) needs to be determined from a fourth configuration table. The second communication indicator threshold indicates a communication indicator threshold, in the fourth configuration table, in the case of exiting an independent Bluetooth antenna. In some embodiments, generally, the second communication indicator threshold is different from the first communication indicator threshold, and the second communication indicator threshold is less than the first communication indicator threshold. Certainly, in some embodiments, the second communication indicator threshold may alternatively be equal to the first communication indicator threshold.

For example, the fourth configuration table may include at least one Bluetooth coding format, identification information of at least one router, at least one isolation range, at least one operating mode (or described as a first operating mode), a first communication indicator threshold corresponding to an operating mode, a Bluetooth coding format, identification information of a router, and an isolation range, and a first communication indicator threshold corresponding to an operating mode, a Bluetooth coding format, identification information of a router, and an isolation range. For example, the Bluetooth coding format is LDAC 990 kbps, the identification information of the router is A, and an isolation between antennas is a, where a is greater than the first isolation threshold al. The electronic device that may determine, based on Table 8, that the second communication indicator threshold may include a Bluetooth transmit power threshold BT TX 2, a Bluetooth received signal strength threshold BT RSSI 2, a Bluetooth symbol error rate threshold BT BTBLER 2, a Wi-Fi transmit power threshold Wi-Fi TX 2, a Wi-Fi received signal strength threshold Wi-Fi RSSI 2, a Wi-Fi symbol error rate threshold Wi-Fi BTBLER 2, a Wi-Fi signal-to-noise ratio threshold Wi-Fi SNR 2, and the like.

**Table 8**

| Sequence number | Bluetooth coding format | Router identifier | Isolation range | Operating mode identifier | First communication indicator threshold | Second communication indicator threshold |
|---|---|---|---|---|---|---|
| 1 | AAC | A | a<a₂ | Time division mode+40 MHz | None | None |
| 2 | SBC | A | a<a₂ | Time division mode+40 MHz | None | None |
| 3 | LDAC 990 | A | a>a₁ | Parallel mode+40 MHz (namely, the second parallel mode) | At least one of a Bluetooth transmit power threshold BT TX 1, a Bluetooth received signal strength threshold BT RSSI 1, a Bluetooth symbol error rate threshold BT | At least one of a Bluetooth transmit power threshold BT TX 2, a Bluetooth received signal strength threshold BT RSSI 2, a Bluetooth symbol error rate threshold BT |
| | | | | | BTBLER 1, a Wi-Fi transmit power Wi-Fi TX 1, a Wi-Fi received signal strength Wi-Fi RSSI 1, a Wi-Fi symbol error rate Wi-Fi BTBLER 1, and a Wi-Fi signal-to-noise ratio Wi-Fi SNR 1 | BTBLER 2, a Wi-Fi transmit power Wi-Fi TX 2, a Wi-Fi received signal strength Wi-Fi RSSI 2, a Wi-Fi symbol error rate Wi-Fi BTBLER 2, and a Wi-Fi signal-to-noise ratio Wi-Fi SNR 2 |
| 4 | LDAC 330 | A | a₂<a<a₁ | Parallel mode+20 MHz (namely, the first parallel mode) | At least one of a Bluetooth transmit power threshold BT TX 3, a Bluetooth received signal strength threshold BT RSSI 3, a Bluetooth symbol error rate threshold BT | At least one of a Bluetooth transmit power threshold BT TX 4, a Bluetooth received signal strength threshold BT RSSI 4, a Bluetooth symbol error rate threshold BT |
| | | | | | BTBLER 3, a Wi-Fi transmit power Wi-Fi TX 3, a Wi-Fi received signal strength Wi-Fi RSSI 3, a Wi-Fi symbol error rate Wi-Fi BTBLER 3, and a Wi-Fi signal-to-noise ratio Wi-Fi SNR 3 | BTBLER 4, a Wi-Fi transmit power Wi-Fi TX 4, a Wi-Fi received signal strength Wi-Fi RSSI 4, a Wi-Fi symbol error rate Wi-Fi BTBLER 4, and a Wi-Fi signal-to-noise ratio Wi-Fi SNR 4 |
| 5 | AAC, SBC, and LDAC | C | a>a₁ | Parallel mode+40 MHz (namely, the second parallel mode) | At least one of a Bluetooth transmit power threshold BT TX 5, a Bluetooth received signal strength threshold BT RSSI 5, a Bluetooth symbol error rate threshold BT | At least one of a Bluetooth transmit power threshold BT TX 6, a Bluetooth received signal strength threshold BT RSSI 6, a Bluetooth symbol error rate threshold BT |
| | | | | | BTBLER 5, a Wi-Fi transmit power Wi-Fi TX 5, a Wi-Fi received signal strength Wi-Fi RSSI 5, a Wi-Fi symbol error rate Wi-Fi BTBLER 5, and a Wi-Fi signal-to-noise ratio Wi-Fi SNR 5 | BTBLER 6, a Wi-Fi transmit power Wi-Fi TX 6, a Wi-Fi received signal strength Wi-Fi RSSI 6, a Wi-Fi symbol error rate Wi-Fi BTBLER 6, and a Wi-Fi signal-to-noise ratio Wi-Fi SNR 6 |
| 6 | AAC | C | a₂<a<a₁ | Parallel mode+20 MHz (namely, the first parallel mode) | At least one of a Bluetooth transmit power threshold BT TX 7, a Bluetooth received signal strength threshold BT RSSI 7, a Bluetooth symbol error rate threshold BT | At least one of a Bluetooth transmit power threshold BT TX 8, a Bluetooth received signal strength threshold BT RSSI 8, a Bluetooth symbol error rate threshold BT |

| Sequence number | Bluetooth coding format | Router identifier | Isolation range | Operating mode identifier | First communication indicator threshold | Second communication indicator threshold |
|---|---|---|---|---|---|---|
| | | | | | BTBLER 7, a Wi-Fi transmit power Wi-Fi TX 7, a Wi-Fi received signal strength Wi-Fi RSSI 7, a Wi-Fi symbol error rate Wi-Fi BTBLER 7, and a Wi-Fi signal-to-noise ratio Wi-Fi SNR 7 | BTBLER 8, a Wi-Fi transmit power Wi-Fi TX 8, a Wi-Fi received signal strength Wi-Fi RSSI 8, a Wi-Fi symbol error rate Wi-Fi BTBLER 8, and a Wi-Fi signal-to-noise ratio Wi-Fi SNR 8 |

It should be noted that the first communication indicator threshold and the second communication indicator threshold in Table 8 are merely examples. In some embodiments, the first communication indicator threshold and the second communication indicator threshold may include only a Wi-Fi received signal strength RSSI. In some embodiments, the first communication indicator threshold and the second communication indicator threshold may include a Bluetooth received signal strength RSSI, a Wi-Fi received signal strength RSSI, and the like. This is not specifically limited.

It can be understood that the first operating mode being the time division mode indicates that the electronic device does not need to enter the independent transmission state to perform Bluetooth communication. Therefore, the first communication indicator threshold or the second communication indicator threshold does not need to be set.

S1002: The electronic device compares the second communication indicator threshold with the latest communication indicator, and determines whether the latest communication indicator meets a third preset condition.

For example, the electronic device determines whether the latest communication indicator meets the third preset condition. If the latest communication indicator meets the third preset condition, the electronic device may determine to exit the independent transmission state, and the electronic device may perform S1003. If the latest communication indicator does not meet the third preset condition, the electronic device may continue to remain in the independent transmission state, and may perform S1004.

In some examples, the third preset condition may include that a Wi-Fi received signal strength is less than a first Wi-Fi received signal strength threshold.

In some other embodiments, certainly, the third preset condition including that the Wi-Fi received signal strength is less than the first Wi-Fi received signal strength threshold is merely an example, and the third preset condition may alternatively not include that the Wi-Fi received signal strength is less than the first Wi-Fi received signal strength threshold. To be specific, the third preset condition may include at least one of the following: The Wi-Fi received signal strength is less than the first Wi-Fi received signal strength threshold, a Bluetooth transmit power is less than a first Bluetooth transmit power threshold, a Bluetooth received signal strength is less than a first Bluetooth received signal strength threshold, a Bluetooth symbol error rate is greater than a first Bluetooth symbol error rate threshold, a Wi-Fi transmit power is less than a first Wi-Fi transmit power threshold, a Wi-Fi signal-to-noise ratio is greater than a first Wi-Fi signal-to-noise ratio threshold, a Wi-Fi symbol error rate is greater than a first Wi-Fi symbol error rate threshold, and a Bluetooth signal-to-noise ratio is greater than a first Bluetooth signal-to-noise ratio threshold.

It should be understood that the foregoing configuration tables (for example, the first configuration table, the second configuration table, the third configuration table, and the fourth configuration table) may be one table or different tables. This is not limited in this application.

In an example, the current communication indicator includes a Wi-Fi received signal strength, the second communication indicator threshold includes a second Wi-Fi received signal strength threshold, and the third preset condition may include that a Wi-Fi received signal strength is less than the second Wi-Fi received signal strength threshold. The electronic device determines whether the Wi-Fi received signal strength is less than the second Wi-Fi received signal strength threshold. The Wi-Fi received signal strength being less than the second Wi-Fi received signal strength threshold indicates that a current benefit value of the electronic device in the parallel mode is low. The electronic device determines that the electronic device does not meet the third preset condition, and may exit the independent transmission state without continuing to perform Bluetooth communication in the parallel mode. This can retain a Wi-Fi rate while saving resources, and therefore improve user experience. The Wi-Fi received signal strength being greater than or equal to the Wi-Fi received signal strength threshold indicates that a current benefit value of the electronic device in the parallel mode is still high. Therefore, the electronic device still needs to perform Bluetooth communication in the parallel mode. In other words, the electronic device continues to remain in the independent transmission state to perform Bluetooth communication.

For example, as shown in Table 5, the router D and the coding format LDAC 990 kbps are used as an example. In this example, when the Wi-Fi received signal strength is -50 dB, the benefit is 155%; and when the Wi-Fi received signal strength is -60dB, the benefit is 6%. In this way, it can be determined that the benefit is lower when the Wi-Fi received signal strength is -60 dB. Therefore, the electronic device needs to exit the independent Bluetooth antenna to reduce an unnecessary waste of resources. The router C and the coding format LDAC 990 kbps are used as an example. In this example, when the Wi-Fi received signal strength is -70 dB, the benefit is still 462%. To be specific, even if the Wi-Fi received signal strength is low, the benefit is still quite high. Therefore, the electronic device may continue to remain in the independent transmission state to perform Bluetooth communication.

In another example, the current communication indicator includes a latest Bluetooth transmit power, the second communication indicator threshold includes a second Bluetooth transmit power threshold, and the third preset condition may include that a Bluetooth transmit power is less than the second Bluetooth transmit power threshold. The electronic device determines whether the latest Bluetooth transmit power is less than the second Bluetooth transmit power threshold. If the latest Bluetooth transmit power is less than the second Bluetooth transmit power threshold, it is determined that the electronic device meets the third preset condition, and the electronic device may exit the independent transmission state to perform Bluetooth communication. If the latest Bluetooth transmit power is greater than or equal to the second Bluetooth transmit power threshold, it is determined that the electronic device does not meet the third preset condition, and the electronic device may continue to remain in the independent transmission state to perform Bluetooth communication.

In another example, the current communication indicator includes a latest Bluetooth received signal strength, the second communication indicator threshold includes a second Bluetooth received signal strength threshold, and the third preset condition may include that a Bluetooth received signal strength is less than the second Bluetooth received signal strength threshold. The electronic device determines whether the latest Bluetooth received signal strength is less than the second Bluetooth received signal strength threshold. If the latest Bluetooth received signal strength is less than the second Bluetooth received signal strength threshold, it is determined that the electronic device meets the third preset condition, and the electronic device may exit the independent transmission state to perform Bluetooth communication. If the latest Bluetooth received signal strength is greater than or equal to the second Bluetooth received signal strength threshold, it is determined that the electronic device does not meet the third preset condition. Therefore, the electronic device may continue to remain in the independent transmission state to perform Bluetooth communication.

In another example, the current communication indicator includes a latest Bluetooth symbol error rate, the second communication indicator threshold includes a second Bluetooth symbol error rate threshold, and the second preset condition may include that a Bluetooth symbol error rate is greater than the first Bluetooth symbol error rate threshold. The electronic device determines whether the latest Bluetooth symbol error rate is greater than the first Bluetooth symbol error rate threshold. The latest Bluetooth symbol error rate being greater than the second Bluetooth symbol error rate threshold indicates that the Bluetooth communication is subject to small interference from the Wi-Fi communication, to be specific, data transmission quality of the Bluetooth module is good. Therefore, it is determined that the electronic device meets the third preset condition, and the electronic device may exit the independent transmission state to perform Bluetooth communication. If the latest Bluetooth symbol error power is less than or equal to the second Bluetooth symbol error rate threshold, it is determined that the electronic device does not meet the third preset condition, and the electronic device may continue to remain in the independent transmission state to perform Bluetooth communication.

In another example, the current communication indicator includes a latest Bluetooth signal-to-noise ratio, the second communication indicator threshold includes a second Bluetooth signal-to-noise ratio threshold, and the third preset condition may include that a Bluetooth signal-to-noise ratio is greater than the second Bluetooth signal-to-noise ratio threshold. Specifically, the electronic device determines whether the latest Bluetooth signal-to-noise ratio is greater than the second Bluetooth signal-to-noise ratio threshold. The latest Bluetooth signal-to-noise ratio being greater than the second Bluetooth signal-to-noise ratio threshold indicates that a Bluetooth signal is slightly affected by an interference signal (for example, noise). Therefore, it is determined that the electronic device can meet the third preset condition, and the electronic device exits the independent transmission state to perform Bluetooth communication. If the latest Bluetooth signal-to-noise ratio is less than or equal to the second Bluetooth signal-to-noise ratio threshold, it is determined that the electronic device does not meet the third preset condition, and the electronic device may continue to remain in the independent transmission state to perform Bluetooth communication.

In another example, the current communication indicator includes a latest Wi-Fi transmit power, the second communication indicator threshold includes a second Wi-Fi transmit power threshold, and the third preset condition may include that a Wi-Fi transmit power is less than the second Wi-Fi transmit power threshold. The electronic device determines whether the latest Wi-Fi transmit power is less than the second Wi-Fi transmit power threshold. If the latest Wi-Fi transmit power is less than the second Wi-Fi transmit power threshold, it is determined that the electronic device meets the third preset condition, and the electronic device may exit the independent transmission state to perform Bluetooth communication. If the latest Wi-Fi transmit power is greater than or equal to the second Wi-Fi transmit power threshold, it is determined that the electronic device does not meet the third preset condition, and the electronic device may continue to remain in the independent transmission state to perform Bluetooth communication.

In another example, the current communication indicator includes a latest Wi-Fi symbol error rate, the second communication indicator threshold includes a second Wi-Fi symbol error rate threshold, and the third preset condition may include that a Wi-Fi symbol error rate is greater than the second Wi-Fi symbol error rate threshold. The electronic device determines whether the latest Wi-Fi symbol error rate is greater than the second Wi-Fi symbol error rate threshold. The latest Wi-Fi symbol error rate being greater than the second Wi-Fi symbol error rate threshold indicates that the Wi-Fi communication is subject to small interference from the Bluetooth communication, to be specific, data transmission quality of the Wi-Fi module is good. Therefore, it is determined that the electronic device meets the third preset condition, and the electronic device may exit the independent transmission state to perform Bluetooth communication. If the latest Wi-Fi symbol error power is less than or equal to the second Wi-Fi symbol error rate threshold, it is determined that the electronic device does not meet the third preset condition, and the electronic device may continue to remain in the independent transmission state to perform Bluetooth communication.

In another example, the current communication indicator includes a latest Wi-Fi signal-to-noise ratio, the second communication indicator threshold includes a second Wi-Fi signal-to-noise ratio threshold, and the third preset condition may include that a Wi-Fi signal-to-noise ratio is greater than the second Wi-Fi signal-to-noise ratio threshold. The electronic device determines whether the latest Wi-Fi signal-to-noise ratio is greater than the second Wi-Fi signal-to-noise ratio threshold. The latest Wi-Fi signal-to-noise ratio being greater than the second Wi-Fi signal-to-noise ratio threshold indicates that a Wi-Fi signal is slightly affected by an interference signal (for example, noise). Therefore, it is determined that the electronic device can meet the third preset condition, and the electronic device exits the independent transmission state to perform Bluetooth communication. If the latest Wi-Fi signal-to-noise ratio is less than or equal to the second Wi-Fi signal-to-noise ratio threshold, it is determined that the electronic device does not meet the third preset condition, and the electronic device may continue to remain in the independent transmission state to perform Bluetooth communication.

The foregoing describes how the electronic device determines whether the electronic device meets the third preset condition when the current communication indicator includes one indicator and the third preset condition includes one condition.

Certainly, in some embodiments, the current communication indicator may alternatively include a plurality of indicators. Correspondingly, the third preset condition may alternatively include a plurality of conditions. To be specific, the third preset condition may include a condition corresponding to each of the plurality of indicators. In this case, for each indicator of the current communication indicator, the electronic device determines whether the electronic device meets a condition corresponding to the indicator. If the electronic device meets a condition corresponding to at least one indicator, the electronic device may determine that the electronic device meets the third preset condition. If the electronic device meets none of conditions corresponding to all indicators, the electronic device may determine that the electronic device does not meet the third preset condition.

For example, the current communication indicator may include a current Wi-Fi received signal strength and a current Wi-Fi transmit power. The third preset condition may include two conditions: The Wi-Fi received signal strength is less than the second Wi-Fi received signal strength threshold, and the Wi-Fi transmit power is less than the second Wi-Fi transmit power threshold. If a latest Wi-Fi received signal strength of the electronic device is less than the second Wi-Fi received signal strength threshold or a latest Wi-Fi transmit power is less than the second Wi-Fi transmit power threshold, it can be determined that the electronic device meets the third preset condition.

Alternatively, if the electronic device meets a condition corresponding to each indicator, the electronic device may determine that the electronic device meets the third preset condition. If the electronic device does not meet a condition corresponding to at least one indicator, the electronic device may determine that the electronic device does not meet the third preset condition.

S1003: The electronic device exits the independent transmission state.

Specifically, when determining that the electronic device meets the third preset condition, the electronic device determines that the electronic device may exit the independent transmission state, to be specific, the electronic device is to perform Bluetooth communication and Wi-Fi communication in the time division mode.

S1004: The electronic device continues to remain in the independent transmission state.

Specifically, when determining that the electronic device does not meet the third preset condition, the electronic device determines that the electronic device may continue to perform Bluetooth communication and Wi-Fi communication in the parallel mode, in other words, the electronic device may continue to remain in the independent transmission state to perform Bluetooth communication.

It can be understood that, when the electronic device or the server does not include the foregoing configuration tables (for example, the first configuration table, the second configuration table, the third configuration table, and the fourth configuration table) or the configuration tables do not include latest information, for example, do not include a router of a latest model or a Bluetooth coding format, the electronic device or the server may determine related information through autonomous learning, and add the related information to a corresponding configuration table after the learning is completed, so that the related information can be quickly found from the configuration table, and learning costs are reduced. For example, the electronic device may determine the first communication indicator threshold and the second communication indicator threshold through autonomous learning.

It should be noted that when the electronic device simultaneously performs Wi-Fi communication and Bluetooth communication, if operating frequency bands corresponding to the Wi-Fi communication and the Bluetooth communication do not overlap, the electronic device may directly perform Bluetooth communication and Wi-Fi communication in the time division mode or the parallel mode. Alternatively, the electronic device may determine, by using the solution disclosed in this application, whether it is necessary to enter the independent transmission state, and if it is necessary to enter the independent transmission state, the electronic device may directly enter the parallel mode. Alternatively, the electronic device determines, by using the solution disclosed in this application, whether it is necessary to enter the independent transmission state, and if it is necessary to enter the independent transmission state, the electronic device may determine whether it is necessary to perform Bluetooth communication. This is not limited in this application.

In some embodiments, in a process of determining the first operating mode, the electronic device may obtain Wi-Fi rates corresponding to different operating modes, and then may determine, based on the Wi-Fi rates corresponding to different operating modes, a Wi-Fi benefit achieved when the time division mode is switched to the parallel mode. Further, the electronic device may use a communication indicator corresponding to a high Wi-Fi benefit (for example, the Wi-Fi benefit is greater than 0 or is greater than a specified value) as the first communication indicator threshold. For example, an example in which the first communication indicator threshold is the first Wi-Fi received signal strength threshold is used for description. A Wi-Fi rate in the time division mode is a rate 1. After switching is performed to the parallel mode, a Wi-Fi rate is a rate 2. A benefit 1 is obtained based on the rate 1 and the rate 2. If the benefit 1 is greater than a specified value, it can be determined that a Wi-Fi received signal strength in this case is the first Wi-Fi received signal strength threshold.

In some embodiments, in a process of determining the first operating mode, Wi-Fi rates in different operating modes may be obtained. After determining the first operating mode by using the Wi-Fi rates in different operating modes, the electronic device may determine the second communication indicator threshold by using a Wi-Fi rate in the first operating mode. The Wi-Fi rate in the first operating mode being less than a Wi-Fi rate threshold indicates that a negative benefit may be achieved in a current case. In this case, a corresponding Wi-Fi received signal strength is the second Wi-Fi received signal strength threshold.

In some embodiments, in an embodiment of this application, the electronic device may include a Wi-Fi module, a Bluetooth module (or referred to as a Bluetooth chip), and a first processing module. The first processing module is configured to determine an operating mode, the first communication indicator threshold, and the second communication indicator threshold. For example, the first processing module may include a processor, for example, an AP.

In an example, the Wi-Fi module and the Bluetooth module may be integrated into one chip, and the chip may be referred to as a Wi-Fi Bluetooth chip; or the Wi-Fi module and the Bluetooth module may be located in different chips, for example, the Wi-Fi module is integrated into one chip, and the Bluetooth module is integrated into another chip.

In this application, after updating a configuration table (for example, the first configuration table), the electronic device may upload an updated first configuration table to the server. In this way, another electronic device can obtain the updated configuration table from the server, so that the another electronic device can quickly find a corresponding operating mode from the updated first configuration table, and the another electronic device no longer needs to determine whether the electronic device meets the second preset condition to determine an operating mode. This effectively simplifies a processing process, and improves processing efficiency.

For example, the electronic device may upload an updated first configuration table to the server periodically or in real time. Periodical uploading can avoid resource overheads caused by uploading the first configuration table each time the first configuration table is updated.

During implementation, the steps of the foregoing methods may be performed by a hardware integrated logic circuit in a processor or by using instructions in a form of software. The steps of the methods disclosed with reference to the embodiments of this application may be directly implemented by a hardware processor, or may be implemented by a combination of hardware and software units in a processor. The software unit may be located in a mature storage medium in the art, for example, a random access memory, a flash memory, a read-only memory, a programmable read-only memory, an electrically erasable programmable memory, or a register. The storage medium is located in a memory. The processor executes instructions in the memory, to perform the steps of the foregoing methods in combination with hardware in the processor. To avoid repetition, details are not described herein again.

An embodiment of this application further provides a computer-readable storage medium. The computer-readable storage medium includes computer instructions. When the computer instructions are run on the foregoing electronic device, the electronic device is enabled to perform the functions or the steps in the foregoing method embodiments.

An embodiment of this application further provides a computer program product, including a computer program. When the computer program is run on an electronic device, the electronic device is enabled to perform the functions or the steps in the foregoing method embodiments.

An embodiment of this application provides a chip. The chip is configured to execute instructions. When the chip runs, the technical solutions in the foregoing embodiments are performed. An implementation principle and technical effects of the chip are similar. Details are not described herein again.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer instructions are loaded and executed on a computer, all or some of processes or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid state disk, SSD)), or the like.

It should be understood that an "embodiment" mentioned throughout this specification means that particular features, structures, or characteristics related to the embodiment are included in at least one embodiment of this application. Therefore, the embodiments throughout this specification are not necessarily a same embodiment. In addition, these particular features, structures, or characteristics may be combined in one or more embodiments in any appropriate manner. It should be understood that sequence numbers of the foregoing processes do not mean execution sequences in the embodiments of this application. The execution sequences of the processes should be determined based on functions and internal logic of the processes, and should not be construed as any limitation on implementation processes of the embodiments of this application.

It should be further understood that in this application, "when" and "if" both mean that the UE or the base station performs corresponding processing in an objective situation, which is not limited in time, and does not require an action that needs to be determined when the UE or the base station implements the processing, and does not mean that there is another limitation.

A person of ordinary skill in the art can understand that various numbers such as first and second in this application are merely intended for differentiation for ease of description, but not to limit the scope of the embodiments of this application or indicate a sequence.

In this application, an element represented in a singular form is intended to represent "one or more", rather than "one and only one", unless otherwise specified. In this application, unless otherwise specified, "at least one" is intended to represent "one or more", and "a plurality of" is intended to represent "two or more".

The term "and/or" in this specification describes only an association relationship between associated objects and represents that three relationships may exist. For example, A and/or B may represent the following three cases: Only A exists, both A and B exist, and only B exists, where A may be in a singular or plural form, and B may be in a singular or plural form.

In this specification, the term "at least one of" or "at least one type of" represents all or any combination of the listed items. For example, "at least one of A, B, and C" may represent the following six cases: Only A exists, only B exists, only C exists, both A and B exist, both B and C exist, and all of A, B, and C exist, where A may be in a singular or plural form, B may be in a singular or plural form, and C may be in a singular or plural form.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can clearly understand that, for ease and conciseness of description, for specific working processes of the foregoing systems, apparatuses, and units, reference may be made to the corresponding processes in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of the embodiments.

In addition, functional units in the embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods in the embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

For same or similar parts in the embodiments of this application, refer to the embodiments. In the embodiments of this application and the implementations/implementation methods in the embodiments, unless otherwise specified or in logical conflicts, terms and/or descriptions between different embodiments and implementations/implementation methods in the embodiments have consistency and may be mutually referenced. Technical features in different embodiments and implementations/implementation methods in the embodiments may be combined according to internal logical relationships thereof to form a new embodiment, implementation, implementation method. The foregoing implementations of this application do not constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, a protection scope of this application should be subject to a protection scope of the claims. In short, the foregoing descriptions are merely example embodiments of this application and are not intended to limit the protection scope of this application. Any modification, equivalent replacement, or improvement made without departing from the spirit and principle of this application shall fall within the protection scope of this application.

## Claims

1. A communication method, applied to an electronic device, wherein the electronic device is equipped with a first antenna and a second antenna, the first antenna is different from the second antenna, and the method comprises:
obtaining, by the electronic device, a first communication indicator threshold if the electronic device meets a first preset condition when the electronic device performs wireless fidelity Wi-Fi communication, wherein the electronic device performs Bluetooth communication and Wi-Fi communication by using the first antenna when the electronic device meets the first preset condition, and the first communication indicator threshold comprises a first Wi-Fi received signal strength threshold; and
performing, by the electronic device, Wi-Fi communication by using the first antenna and performing Bluetooth communication by using the second antenna when a latest communication indicator meets a second preset condition, wherein the second preset condition comprises that a Wi-Fi received signal strength is greater than the first Wi-Fi received signal strength threshold.

2. The method according to claim 1, wherein the first communication indicator threshold further comprises at least one of a first Bluetooth transmit power threshold, a first Wi-Fi symbol error rate threshold, a first Bluetooth received signal strength threshold, a first Bluetooth symbol error rate threshold, a first Wi-Fi transmit power threshold, a first Wi-Fi signal-to-noise ratio threshold, and a first Bluetooth signal-to-noise ratio threshold; and
the second preset condition further comprises at least one of the following: a Bluetooth transmit power is greater than the first Bluetooth transmit power threshold, a Bluetooth received signal strength is greater than the first Bluetooth received signal strength threshold, a Bluetooth symbol error rate is less than the first Bluetooth symbol error rate threshold, a Wi-Fi transmit power is greater than the first Wi-Fi transmit power threshold, a Wi-Fi signal-to-noise ratio is less than the first Wi-Fi signal-to-noise ratio threshold, a Wi-Fi symbol error rate is less than the first Wi-Fi symbol error rate threshold, and a Bluetooth signal-to-noise ratio is less than the first Bluetooth signal-to-noise ratio threshold.

3. The method according to claim 1 or 2, wherein the first preset condition comprises that the electronic device starts to perform Bluetooth communication, or a communication quality value of a target communication mode of the electronic device is less than a preset quality value in a process in which the electronic device performs Bluetooth communication and Wi-Fi communication by using the first antenna, wherein the target communication mode comprises a Wi-Fi communication mode and/or a Bluetooth communication mode.

4. The method according to claim 1 or 2, wherein the obtaining, by the electronic device, a first communication indicator threshold if the electronic device meets a first preset condition comprises:
determining, by the electronic device, a first communication parameter of the electronic device if the electronic device meets the first preset condition, wherein the first communication parameter comprises at least one of a first Bluetooth coding format, identification information of a first router, and a first isolation;
determining, by the electronic device, a first operating mode by using a first configuration table; and
obtaining, by the electronic device, the first communication indicator threshold when the first operating mode is a parallel mode.

5. The method according to claim 4, wherein the determining, by the electronic device, a first operating mode by using a first configuration table comprises:
when the first configuration table comprises an operating mode identifier corresponding to the first communication parameter, the first operating mode is an operating mode indicated by the operating mode identifier corresponding to the first communication parameter; or
when the first configuration table does not comprise an operating mode identifier corresponding to the first communication parameter, the first operating mode is determined based on a Wi-Fi rate corresponding to a time division mode and/or a parallel mode, wherein the parallel mode indicates that an antenna used by the electronic device to perform Wi-Fi communication is different from an antenna used by the electronic device to perform Bluetooth communication.

6. The method according to claim 5, wherein that the first operating mode is determined based on a Wi-Fi rate corresponding to a time division mode and/or a parallel mode comprises: the first operating mode is an operating mode, with a highest Wi-Fi rate, of the time division mode and the parallel mode.

7. The method according to claim 5, wherein that the first operating mode is determined based on a Wi-Fi rate corresponding to a time division mode and/or a parallel mode comprises: when a first Wi-Fi rate corresponding to the time division mode is less than a preset rate and a second Wi-Fi rate corresponding to the parallel mode is greater than the first Wi-Fi rate, the first operating mode is the parallel mode; or
when the first Wi-Fi rate corresponding to the time division mode is greater than or equal to the preset rate, the first operating mode is the time division mode.

8. The method according to claim 7, wherein the parallel mode comprises a first parallel mode and a second parallel mode; in the first parallel mode, when Bluetooth communication and Wi-Fi communication are performed in a parallel mode, an operating bandwidth corresponding to the Wi-Fi communication is a first operating bandwidth; in the second parallel mode, when Bluetooth communication and Wi-Fi communication are performed in a parallel mode, an operating bandwidth corresponding to the Wi-Fi communication is a second operating bandwidth; and the first operating bandwidth is different from the second operating bandwidth; and
that the first operating mode is the parallel mode comprises: the first operating mode is an operating mode, with a highest Wi-Fi rate, of the first parallel mode and the second parallel mode.

9. The method according to claim 5, wherein that the first operating mode is determined based on a Wi-Fi rate corresponding to a time division mode and/or a parallel mode comprises: when a first Wi-Fi rate corresponding to the time division mode is less than a preset rate and a second Wi-Fi rate corresponding to the parallel mode is greater than a preset rate, the first operating mode is the parallel mode; or
when the first Wi-Fi rate corresponding to the time division mode is less than the preset rate and the second Wi-Fi rate corresponding to the parallel mode is less than the preset rate, the first operating mode is an operating mode, with a highest Wi-Fi rate, of the time division mode and the parallel mode.

10. The method according to claim 1 or 2, wherein the method further comprises:
after the electronic device performs Wi-Fi communication by using the first antenna and performs Bluetooth communication by using the second antenna, determining, by the electronic device, a second communication indicator threshold, wherein the second communication indicator threshold is used for determining whether the electronic device meets a third preset condition, and the second communication indicator threshold comprises a second Wi-Fi received signal strength threshold; and
performing, by the electronic device, Bluetooth communication and Wi-Fi communication by using the first antenna when the latest communication indicator meets the third preset condition, wherein the third preset condition comprises that the Wi-Fi received signal strength is less than the second Wi-Fi received signal strength threshold.

11. The method according to claim 10, wherein the second communication indicator threshold further comprises at least one of a second Bluetooth transmit power threshold, a second Wi-Fi symbol error rate threshold, a second Bluetooth received signal strength threshold, a second Bluetooth symbol error rate threshold, a second Wi-Fi transmit power threshold, a second Wi-Fi signal-to-noise ratio threshold, and a second Bluetooth signal-to-noise ratio threshold; and
the third preset condition further comprises at least one of the following: a Bluetooth transmit power is less than the second Bluetooth transmit power threshold, a Bluetooth received signal strength is less than the second Bluetooth received signal strength threshold, a Bluetooth symbol error rate is greater than the second Bluetooth symbol error rate threshold, a Wi-Fi transmit power is less than the second Wi-Fi transmit power threshold, a Wi-Fi signal-to-noise ratio is greater than the second Wi-Fi signal-to-noise ratio threshold, a Wi-Fi symbol error rate is greater than the second Wi-Fi symbol error rate threshold, and a Bluetooth signal-to-noise ratio is greater than the second Bluetooth signal-to-noise ratio threshold.

12. An electronic device, wherein the electronic device comprises a display, a memory, a Bluetooth module, a Wi-Fi module, and one or more processors; the display, the memory, the Bluetooth module, and the Wi-Fi module are coupled to the processor; the Bluetooth module is configured to perform Bluetooth communication, the Wi-Fi module is configured to perform Wi-Fi communication, the display is configured to display an image generated by the processor, the memory is configured to store computer program code, and the computer program code comprises computer instructions; and when the processor executes the computer instructions, the electronic device is enabled to perform the method according to any one of claims 1 to 11.

13. A computer-readable storage medium, comprising computer instructions, wherein when the computer instructions are run on an electronic device, the electronic device is enabled to perform the method according to any one of claims 1 to 11.

14. A communication method, applied to an electronic device, wherein the electronic device is equipped with a first antenna and a second antenna, the first antenna is different from the second antenna, and the method comprises:
determining, by the electronic device, a first communication parameter of the electronic device if the electronic device meets a first preset condition when the electronic device performs wireless fidelity Wi-Fi communication, wherein the electronic device performs Bluetooth communication and Wi-Fi communication by using the first antenna when the electronic device meets the first preset condition;
when the first configuration table comprises an operating mode identifier corresponding to the first communication parameter, determining an operating mode corresponding to the operating mode identifier corresponding to the first communication parameter as a first operating mode;
obtaining, by the electronic device, a first communication indicator threshold when the first operating mode is a parallel mode, wherein the first communication indicator threshold comprises a first Wi-Fi received signal strength threshold; and
performing, by the electronic device, Wi-Fi communication by using the first antenna and performing Bluetooth communication by using the second antenna when a latest communication indicator meets a second preset condition, wherein the second preset condition comprises that a Wi-Fi received signal strength is greater than the first Wi-Fi received signal strength threshold.

15. The method according to claim 14, wherein the first communication indicator threshold further comprises at least one of a first Bluetooth transmit power threshold, a first Wi-Fi symbol error rate threshold, a first Bluetooth received signal strength threshold, a first Bluetooth symbol error rate threshold, a first Wi-Fi transmit power threshold, a first Wi-Fi signal-to-noise ratio threshold, and a first Bluetooth signal-to-noise ratio threshold; and
the second preset condition further comprises at least one of the following: a Bluetooth transmit power is greater than the first Bluetooth transmit power threshold, a Bluetooth received signal strength is greater than the first Bluetooth received signal strength threshold, a Bluetooth symbol error rate is less than the first Bluetooth symbol error rate threshold, a Wi-Fi transmit power is greater than the first Wi-Fi transmit power threshold, a Wi-Fi signal-to-noise ratio is less than the first Wi-Fi signal-to-noise ratio threshold, a Wi-Fi symbol error rate is less than the first Wi-Fi symbol error rate threshold, and a Bluetooth signal-to-noise ratio is less than the first Bluetooth signal-to-noise ratio threshold.

16. The method according to claim 14 or 15, wherein the first preset condition comprises that the electronic device starts to perform Bluetooth communication, or a communication quality value of a target communication mode of the electronic device is less than a preset quality value in a process in which the electronic device performs Bluetooth communication and Wi-Fi communication by using the first antenna, wherein the target communication mode comprises a Wi-Fi communication mode and/or a Bluetooth communication mode.

17. The method according to claim 14, wherein the first communication parameter comprises at least one of a first Bluetooth coding format, identification information of a first router, and a first isolation.

18. The method according to claim 14 or 17, wherein the method further comprises:
when the first configuration table does not comprise an operating mode identifier corresponding to the first communication parameter, the first operating mode is determined based on a Wi-Fi rate corresponding to a time division mode and/or a parallel mode, wherein the parallel mode indicates that an antenna used by the electronic device to perform Wi-Fi communication is different from an antenna used by the electronic device to perform Bluetooth communication.

19. The method according to claim 18, wherein that the first operating mode is determined based on a Wi-Fi rate corresponding to a time division mode and/or a parallel mode comprises: the first operating mode is an operating mode, with a highest Wi-Fi rate, of the time division mode and the parallel mode.

20. The method according to claim 18, wherein that the first operating mode is determined based on a Wi-Fi rate corresponding to a time division mode and/or a parallel mode comprises: when a first Wi-Fi rate corresponding to the time division mode is less than a preset rate and a second Wi-Fi rate corresponding to the parallel mode is greater than the first Wi-Fi rate, the first operating mode is the parallel mode; or
when the first Wi-Fi rate corresponding to the time division mode is greater than or equal to the preset rate, the first operating mode is the time division mode.

21. The method according to claim 20, wherein the parallel mode comprises a first parallel mode and a second parallel mode; in the first parallel mode, when Bluetooth communication and Wi-Fi communication are performed in a parallel mode, an operating bandwidth corresponding to the Wi-Fi communication is a first operating bandwidth; in the second parallel mode, when Bluetooth communication and Wi-Fi communication are performed in a parallel mode, an operating bandwidth corresponding to the Wi-Fi communication is a second operating bandwidth; and the first operating bandwidth is different from the second operating bandwidth; and
that the first operating mode is the parallel mode comprises: the first operating mode is an operating mode, with a highest Wi-Fi rate, of the first parallel mode and the second parallel mode.

22. The method according to claim 18, wherein that the first operating mode is determined based on a Wi-Fi rate corresponding to a time division mode and/or a parallel mode comprises: when a first Wi-Fi rate corresponding to the time division mode is less than a preset rate and a second Wi-Fi rate corresponding to the parallel mode is greater than a preset rate, the first operating mode is the parallel mode; or
when the first Wi-Fi rate corresponding to the time division mode is less than the preset rate and the second Wi-Fi rate corresponding to the parallel mode is less than the preset rate, the first operating mode is an operating mode, with a highest Wi-Fi rate, of the time division mode and the parallel mode.

23. The method according to claim 14 or 15, wherein the method further comprises:
after the electronic device performs Wi-Fi communication by using the first antenna and performs Bluetooth communication by using the second antenna, determining, by the electronic device, a second communication indicator threshold, wherein the second communication indicator threshold is used for determining whether the electronic device meets a third preset condition, and the second communication indicator threshold comprises a second Wi-Fi received signal strength threshold; and
performing, by the electronic device, Bluetooth communication and Wi-Fi communication by using the first antenna when the latest communication indicator meets the third preset condition, wherein the third preset condition comprises that the Wi-Fi received signal strength is less than the second Wi-Fi received signal strength threshold.

24. The method according to claim 23, wherein the second communication indicator threshold further comprises at least one of a second Bluetooth transmit power threshold, a second Wi-Fi symbol error rate threshold, a second Bluetooth received signal strength threshold, a second Bluetooth symbol error rate threshold, a second Wi-Fi transmit power threshold, a second Wi-Fi signal-to-noise ratio threshold, and a second Bluetooth signal-to-noise ratio threshold; and
the third preset condition further comprises at least one of the following: a Bluetooth transmit power is less than the second Bluetooth transmit power threshold, a Bluetooth received signal strength is less than the second Bluetooth received signal strength threshold, a Bluetooth symbol error rate is greater than the second Bluetooth symbol error rate threshold, a Wi-Fi transmit power is less than the second Wi-Fi transmit power threshold, a Wi-Fi signal-to-noise ratio is greater than the second Wi-Fi signal-to-noise ratio threshold, a Wi-Fi symbol error rate is greater than the second Wi-Fi symbol error rate threshold, and a Bluetooth signal-to-noise ratio is greater than the second Bluetooth signal-to-noise ratio threshold.
